Europäisches Patentamt

(19) European Patent Office

Office européen des brevets

(11) Publication number : **0 488 584 A1**

(12) **EUROPEAN PATENT APPLICATION**

(21) Application number : 91310729.8

(22) Date of filing : 21.11.91

(51) Int. Cl.⁵ : **G06K 7/14**

(30) Priority : **26.11.90 US 617849**

(43) Date of publication of application :
**03.06.92 Bulletin 92/23**

(84) Designated Contracting States :
**DE FR GB**

(71) Applicant : **NCR CORPORATION**
**World Headquarters**
**Dayton, Ohio 45479 (US)**

(72) Inventor : **Jen, Tai-Kuang**
**109 Sharlene Road**
**Ithaca, New York 14850 (US)**
Inventor : **Cogswell, Thomas LeRoy**
**139 Shoemaker Road**
**VanEtten, New York 14889 (US)**
Inventor : **Kwan, Sik-Pui**
**1093 Warren Road, Apt. Nr. 5**
**Ithaca, New York 14850 (US)**

(74) Representative : **Robinson, Robert George**
**International Patent Department NCR Limited**
**915 High Road North Finchley**
**London N12 8QJ (GB)**

(54) **Bar code sensing system.**

(57)   In a bar code sensing system for sensing a record medium carrying bar coded characters, each character is represented by a plurality of regions each having a first or second reflectivity and formed by one or a plurality of contiguous bars of said first or second reflectivity. A single optical sensor (40) provides a sense signal to a self-adjusting reference level circuit (42) which provides a reference level to a comparator (44) connected to the optical sensor (40), whereby data signals are provided to a controller (46). The controller (46) contains first and second timers (TM0, TM1) which are utilized to determine the number of bars in each sensed regions, and the end of each sensed character.

FIG. 3A

EP 0 488 584 A1

**FIG. 3B**

**FIG. 3C**

This invention relates to a bar code sensing system for sensing a record medium carrying bar coded characters.

The invention also relates to a method for decoding bar coded characters located on a record medium.

US Patent No. 4,259,569 discloses a bar code sensing system wherein data bar code symbols are aligned with clock bar code symbols, and two sensing devices are provided, one for sensing the data bar code symbols and one for sensing the clock bar code symbols, as the record medium is moved past the sensing devices. The provision of two sensing devices adds to the expense and complexity of the system hardware.

It is an object of the present invention to provide a bar code sensing system and method wherein expense and complexity of construction may be reduced.

Therefore, according to one aspect of the present invention, there is provided a bar code sensing system for sensing a record medium carrying bar coded characters, each character being represented by a plurality of regions, each region having a first or a second reflectivity and being formed by one or a plurality of contiguous bars of nominal equal width, having said first or second reflectivity, sensing means adapted to sense said bar coded characters as said record medium is moved past said sensing means at a predetermined speed, and controller means coupled to said sensing means, characterized in that said sensing means includes a single sensing device, by reference level determining means coupled to said sensing device and adapted to determine a reference level in response to the sensing of regions of said first reflectivity; by comparison means coupled to said reference level determining means and adapted to provide data signals representing the sensed regions; and in that said controller means is adapted, in response to said data signals, to identify the last region of each sensed character and the number of bars in each sensed region, by dividing a sensed time interval by a predetermined value, thereby enabling the provision of a representation of each sensed character.

According to another aspect of the present invention, there is provided a method for decoding bar coded characters located on a record medium, wherein each character is represented by a plurality of regions, each having a first or a second reflectivity, each region being formed by one or a plurality of contiguous bars of nominally equal width and having said first or second reflectivity, characterized by the steps of moving said second medium at a predetermined speed past a single sensing device adapted to sense said regions; determining a reference level in response to the sensing of regions of said first reflectivity; comparing the output signals of said sensing device with said reference level to provide data signals representing the sensed regions; timing the sensing of said regions to determine the last regions of each sensed character and the number of bars in each sensed region; and dividing a sensed time interval by a predetermined value to determine the number of bars which have been sensed.

It will be appreciated that a system and method according to the invention enable the achievement of sensing and decoding the sensed characters using a single sensing device, thereby reducing the cost and complexity of the system.

Another advantage is that variations in the widths of the printed regions are compensated for, as are differences in reflective characteristics.

One embodiment of the invention will now be described by way of example, with reference to the accompanying drawings, in which:-

Fig. 1 is a plan view of a record member in the form of a guest check on which is located a bar code label;

Fig. 2A is a graphic representation of the bar code symbols together with their representative coded characters;

Fig. 2B is a graphic representation of the end-of-code bar code symbols together with their representative coded characters in accordance with the present invention;

Figs. 3A, 3B, and 3C, taken together, constitute a control and reading circuit for accomplishing the desired result of the present invention;

Fig. 4, on the sheet with Fig. 3C, shows the drawing arrangement of Figs. 3A, 3B, and 3C;

Fig. 5 is a top or plan view of a printing station wherein the record member of Fig. 1 is positioned for a printing operation;

Fig. 6 is a sample timing chart showing the clock and the data wave shapes;

Fig. 7 is a representation of the variation of the detected bar width ratios of a black bar element and a white bar element;

Figs. 8A and 8B constitute a flow chart of the decoding circuit used in the present invention;

Figs. 9A through 9P, inclusive, constitute a flow chart of the program utilized to accomplish the desired results of the present invention;

Fig. 10 is a view showing the drawing arrangement of Figs. 9A through 9P, inclusive;

Figs. 11A, 11B, and 11C, taken together, constitute a flow chart of the routine for recalling a bar from memory and sending the character to the terminal;

Fig. 12, on the sheet with Fig. 11C, shows the drawing arrangement of Figs. 11A, 11B, and 11C; and

Fig. 13 is a flow chart showing the routine for checking errors and the TIMER 1 service routine.

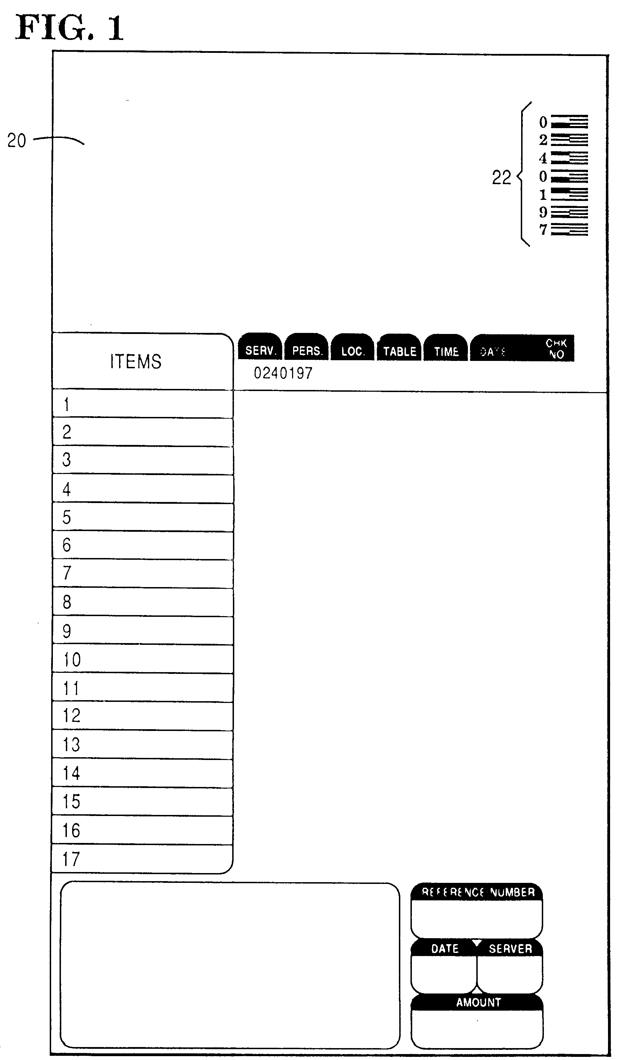

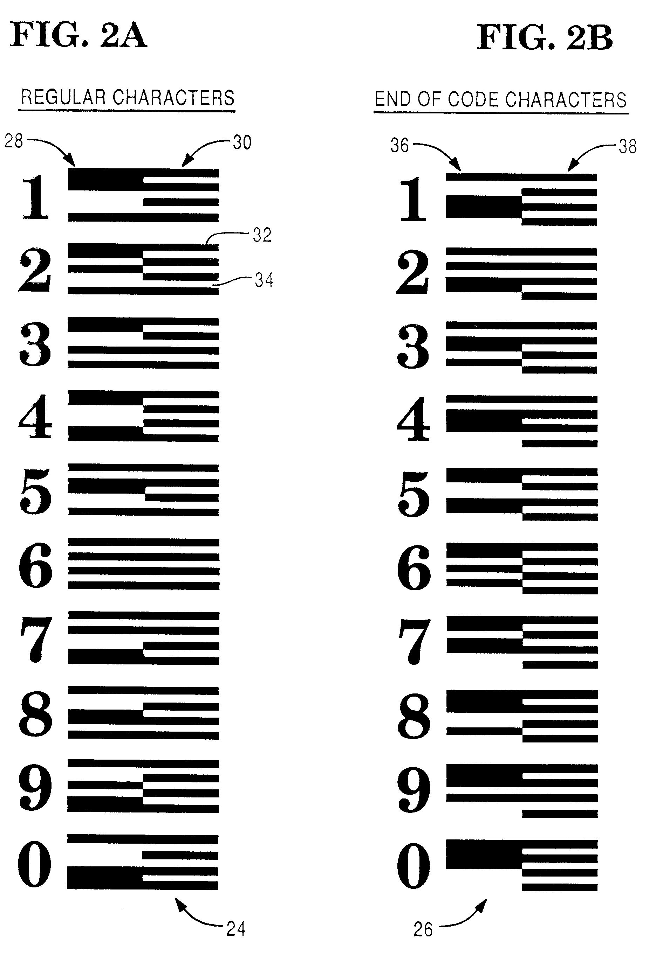

Referring now to Fig. 1, there is shown a plan view of a record or check member 20, such as a guest check which is issued by a motel, hotel or restaurant and on which the customer's charges are printed. Upon registration, the customer is assigned a check member 20 on which is printed a bar code label 22 which may comprise a plurality of character bar code symbols 24 (Fig. 2A) together with a plurality of end-of-code bar code symbols 26 (Fig. 2B) comprising an account number. Any charges incurred by the customer are printed on the check 20 by inserting the check into a printing station located in a terminal device (not shown) and inserting the amount of the charge by means of a keyboard into a printing mechanism in a manner that is well known in the art. A motor driven member in the printing mechanism will drive the check member 20 to a position adjacent the printing members of the printing mechanism which members print the amount of the charge on the check member 20. During an initial movement of the check member 20 by the drive member, a sensing member located at the printing station will read the bar code label 22, enabling the terminal device to identify the customer's account number so that the amount being printed can be added to a running total of the entries on the check member 20. At check-out time, the total amount due is printed on the check 20 for payment by the customer. The bar code reader is normally a part of the printer in the overall system.

Referring now to Fig. 2A, there is shown a graphic representation of the coded indicia such as bar code symbols utilized in the present invention. As shown, each bar code symbol, generally indicated by the numeral 24, includes a character bar code symbol 28 and a clock bar code symbol 30. The character bar code symbols 28 are arranged to be representative of each of the numerical characters 0-9, inclusive, and form a data channel when placed or located and are present on an item or article to be processed. Each of the bar code symbols 28 comprises a series of black bars 32 and a series of white bars or spaces 34 of various thicknesses with each of the bar code symbols 24 being composed of seven equal width data elements or bar positions called modules, wherein each module may be a black bar or a white bar. In sensing the bar code symbols 28 and 30, each white module or space is assigned the value of 0 while a black module or space is assigned the value of 1 in a manner that is well known in the art. It will be noted that the first bar and the last bar of each bar code symbol 24 of the bar code label 22 are black, which characteristic is used in the control of the operation of a motor driven mechanism which drives the check member 20 in a manner to be described hereinafter. By using binary bits for the black and the white module representations, each bar code symbol 24 of the bar code label 22 is arranged to provide a 7-bit pattern. Thus, the decimal or character 1 may be represented in the bar code symbols 24 of Fig. 2A by the 7-bit pattern 1110001. In keeping with this format, the decimal 1 should be comprised of a black bar of a 3-bit width, followed by a white bar or space of a 3-bit width and a 1-bit width black bar. The binary representation of each of the bar code symbols 24 of Fig. 2A is fully disclosed in U.S. Patent No. 4,259,569.

As previously described, associated with each of the data bar code symbols 28 (Fig. 2A) is a second bar code symbol 30 representing clock signals and comprising four equally spaced black bars 32, each of which functions as a bit location reference for the corresponding bits of the respective numerical character in the data symbol 24 in a manner that will be described more fully hereinafter. This bar code arrangement taken in conjunction with its associated bar code symbol 24 allows each coded character to be self-clocking and thereby independent of the speed of the movement of the bar code label 22 (Fig. 1) past the sensing member. While the bar code symbols 28 and 30 of Fig. 2A are shown attached, it is obvious that they may be separated and still function as required for their intended purpose, provided that the code symbols 28 and 30 remain horizontally aligned as shown.

Referring now to Fig. 2B, there is shown a graphic representation of a second set of bar code symbols generally indicated by the numeral 26 and which are used as the last or end-of-character bar code symbols of a bar code label 22. Each of the end-of-code symbols 26 includes a character bar code symbol 36 and a clock bar code symbol 38. The character bar code symbol 36 is similar to its corresponding character bar code symbol 28 (Fig. 2A) in that the first bar of the symbol is always black. The remaining bar positions 2-7 are inverted, that is, a 1 bit appears in the end-of-code character symbol 36 whereas a 0 bit is in the same location in the corresponding character bar code symbol 28. Reference should be made to the previously cited U.S. Patent No. 4,259,569 for the bit arrangement of the bar code symbols 24 and 26. It should be noted that in either case, each bar code symbol 24 or 26 includes four binary bit 1's which characteristic is used as a parity check. The end-of-code clock bar code symbols 38 of the end of code symbols 26 are similar to the clock bar code symbols 30 of the data bar code symbols 24 and function in the same manner.

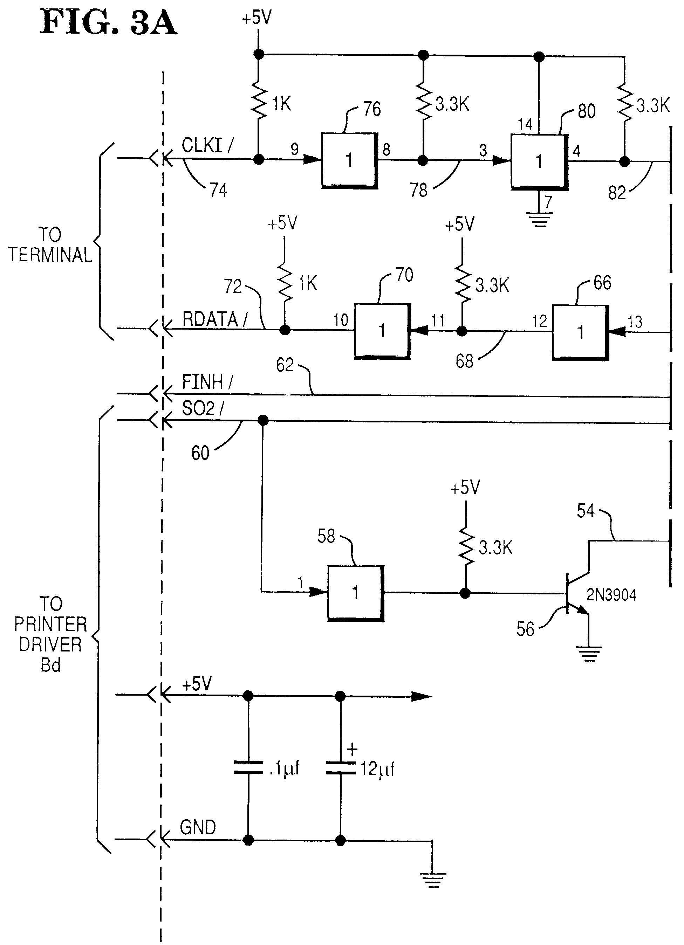

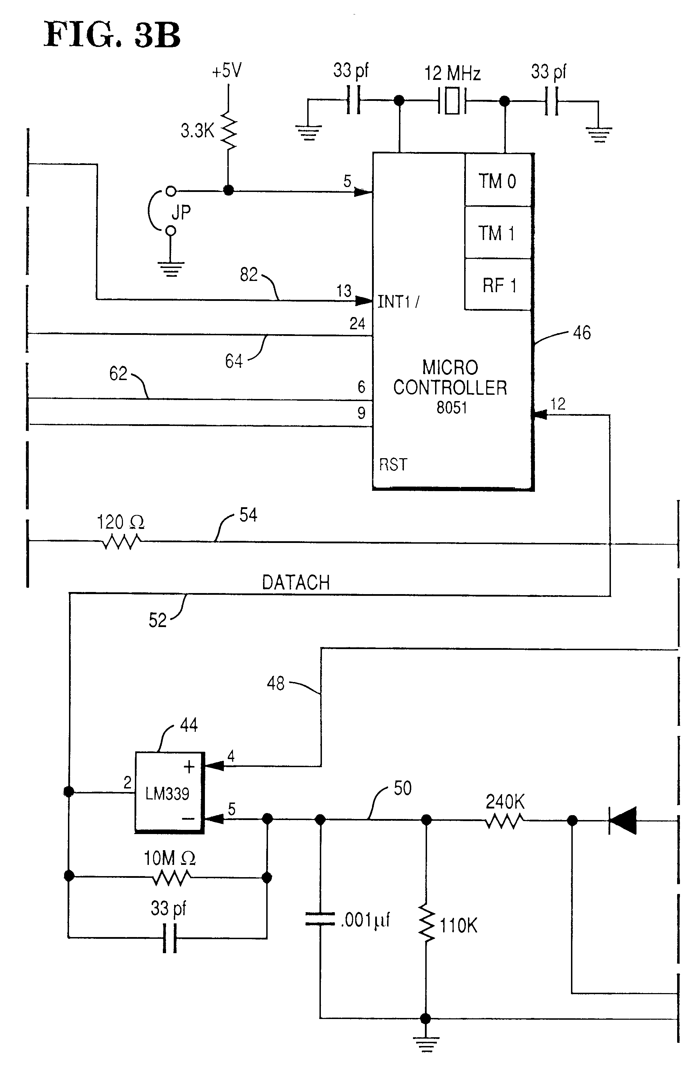

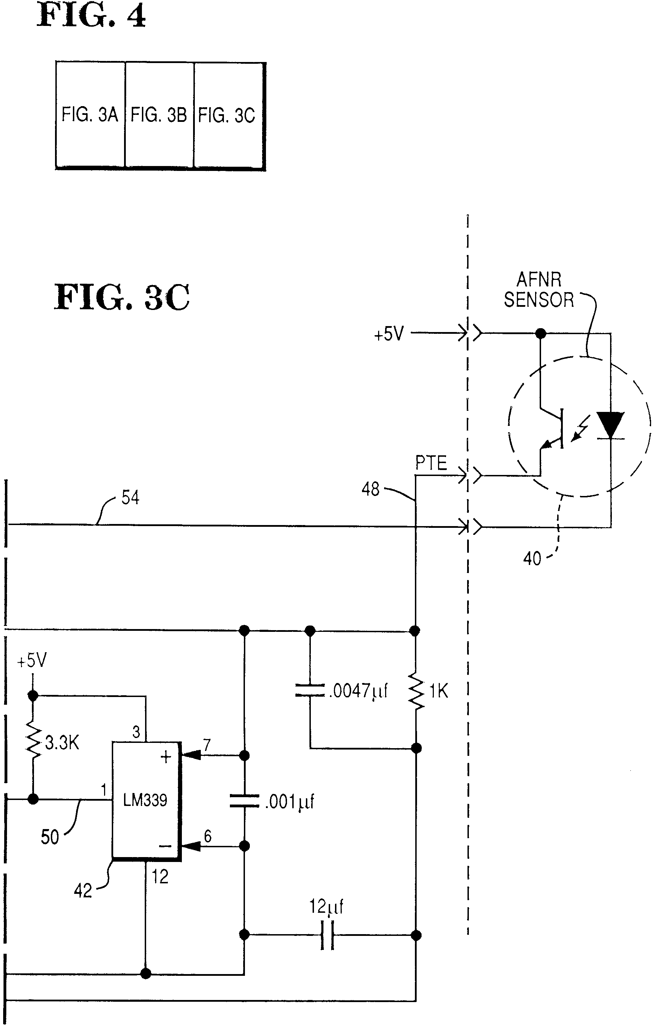

Referring now to Figs. 3A, 3B, and 3C, there is shown a preferred control and reading circuit for a bar code reader utilized as the means for accomplishing the reading of bar code symbols in the present invention. The two major parts of the control and reading circuit are an optical sensing circuit and a microcontroller. An optical sensor 40 (Fig. 3C), also referred to as AFNR sensor, is coupled by means of circuitry which includes a pair of comparators 42 (Fig. 3C) and 44 (Fig. 3B) to a microcontroller 46. The microcontroller 46 and the comparators 42 and 44 are supplied by Intel Corporation. The optical sensor 40 is normally a part of and is mounted on the printer. An output of the optical sensor 40 is a PTE signal carried on lead 48 which is connected to an input of the comparator 42 and to an input of the comparator 44. The PTE signal is an analog signal which corresponds to the black and white bars of the bar code symbol 24 (Fig. 2A). An output of the comparator 42 is connected by a lead 50 to an input of the comparator 44. The output of the comparator 44, as a DATACH (data channel) signal, is connected by a lead 52 to the microcontroller 46 (Fig. 3B). Another output of the optical sensor 40 is carried on a lead 54 which is connected to a transistor 56, in turn, connected to an inverter 58 (Fig. 3A). The inverter 58 is coupled by a lead 60 which carries an S02/ signal from a printer driver board (not shown). The S02/ signal is an on/off digital signal and is so named to refer to the number 2 solenoid or print wire element driver in the AFNR printer associated with the present invention. This S02/ signal is used to control reading of the bar code symbols 22 by the sensor 40 in the AFNR printer. Normally the AFNR sensor signal is high and when the terminal sends a S02 function to the AFNR printer, a control chip on the AFNR printer board switches the signal to low. This low signal enables the AFNR sensor 40 and lifts the reset from the microcontroller 46 (Fig. 3B). A lead 62 is connected to the microcontroller 46 and carries a FINH/ signal to the driver board. The FINH/(finish) signal is an on/off digital signal which is an output of the microcontroller 46 to the control chip of the AFNR printer. Normally the signal is high and when the controller 46 has completed reading all the bar code characters on a form, the controller switches the FINH/ signal to low. The control chip of the AFNR printer then turns off the motor drive for the form feeding mechanism.

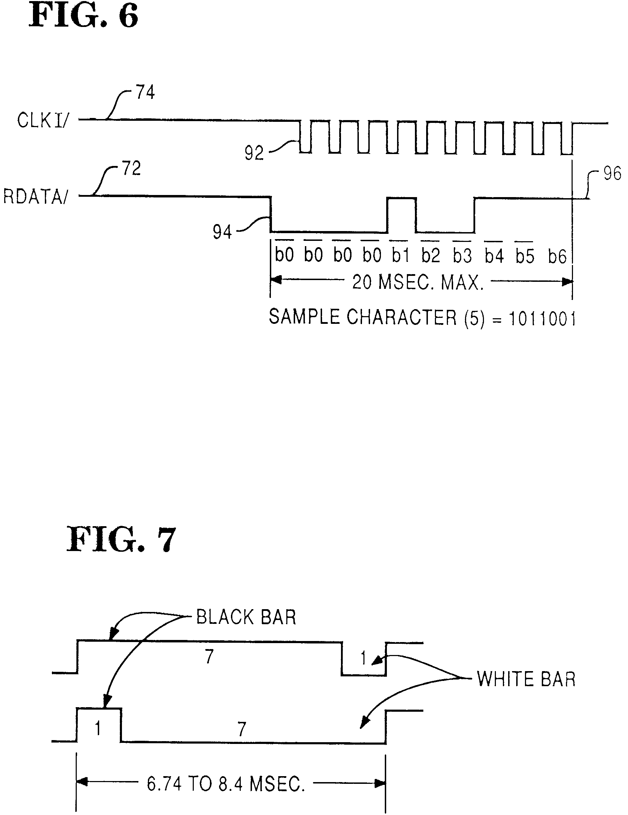

A lead 64 (Fig. 3B) couples the controller 46 to an inverter 66 (Fig. 3A), the output of which is coupled by a lead 68 to an inverter 70 and a lead 72 is provided to carry an RDATA/ signal to the terminal (not shown). The RDATA/(read data) signal is a digital signal carried on the lead 72 which is directly connected from the AFNR printer control board to the terminal. An example of an RDATA/ signal is illustrated in Fig. 6, later described. A clock signal is carried by a lead 74 to an inverter 76 (Fig. 3A), the output of which is connected by a lead 78 to an inverter 80. A lead 82 couples the inverter 80 to an INT 1 / pin of the controller 46. The two inverters 76 and 80 are provided to reduce the noise level in the system.

The guest check or AFNR form 20 is transported under the optical sensor 40 at a rate of 96mm (3.78 inches) per second. The optical sensor position is fixed such that the data channel, represented by the bar code symbols 28 of the bar code 24 (Fig. 2A) of the bar code label 22 on the form 20, passes under the sensor 40. The input line 60 (Fig. 3A) which carries the S02/ signal has to be turned low when a form 20 is being inserted under the sensor 40 in order to turn on the LED of the optical sensor 40 for enabling thereof.

The LED light is then reflected from the white media, the sensor 40 is turned on and the output signal PTE on lead 48 is high. The form is then driven by the drive roller of the printer. When a black bar, as element 32 (Fig. 2A), passes under the sensor 40, the output PTE signal will go low. The comparators 42 and 44 are used in the sensing of the various bars in the bar codes. The first comparator 42 operates as a peak detector which sets a reference voltage for the second comparator 44. This derived reference voltage is approximately half of the peak voltage of the output of the sensor 40. The output of the second comparator 44 is carried by the lead 52 as a data channel (DATACH) signal to the controller 46. The output DATACH signal is a square wave which corresponds to the sensed signals from the bar codes. It should be noted that the circuit achieves a self-adjusted reference voltage from the white media.

The self-adjusted reference voltage is established as follows: The AFNR sensor 40 (Fig. 3C) has two parts, a light source and a sensing transistor. The light source is an LED which is controlled by the S02/ signal and the transistor 56 (Fig. 3A) by way of lead 54. Because of the importance of reliability of the sensor 40, the LED is normally off. When the terminal wants to read the bar code symbols 22 on a form 20, the terminal sends an S02 function to the AFNR printer. The printer control chip switches the S02/ signal low to turn on the drive transistor 56. The LED is turned on and thus emits light. The sensing transistor of the sensor 40 is conducting due to reflected light from the white media. The conducting current flows through a IK resistor in line 48 (Fig. 3C). A higher current flow will have a higher voltage at the signal PTE and a lower current will have a lower voltage at the signal PTE. The amount of current flow is determined by how much light is reflected from the white media. An output voltage of the comparator 42 (Fig. 3C) which operates like a peak detector will charge up the 12uf capacitor at pin 6 of the comparator 42. This charged voltage represents a reflectance of the white media in the manner wherein different white media have different charged voltages. Since the 240R resistor and the 110K resistor (Fig. 3B) form a dividing circuit, the voltage at pin 5 of comparator 44 is approximately one-third of the charged voltage. The voltage at pin 5 of comparator 44 keeps track of the changing reflectance of the white media and is a reference voltage for comparator 44.

However, due to the reflectance of the media from the black bars 32 (Fig. 2A), the sensed bar width may not correspond to the physical dimensions of the bars on the form 20. The designed firmware of the present invention which controls the controller 46, as described in the following paragraphs, handles the deviation between the physical dimensions and the sensed dimensions of the bar codes. The controller 46 analyzes the bar code signals of DATACH on line 52 (Fig. 3B) and then converts the signals into a bar code character, which character is sent to the terminal. If pin 5 of the controller 46 (Fig. 3B) is low, the character will first be stored until all characters are read in from the guest check or form 20 and then all of the characters will be clocked out together. After a character or a group of characters are stored in memory, the controller 46 turns the DATA signal on line 64 low and waits for clocks on the CLK line 74 from the terminal. The controller 46 then outputs one data bit on the RDATA line 64 for each clock. It is to be noted that a character has 3 starting bits and 7 data bits. When a character is finished sending to the terminal, the RDATA signal on line 64 will be turned high which means that sending is completed and the controller is preparing the next character. The RDATA signal is turned low when a character is ready for sending, and data sending is completed when an end character is clocked out.

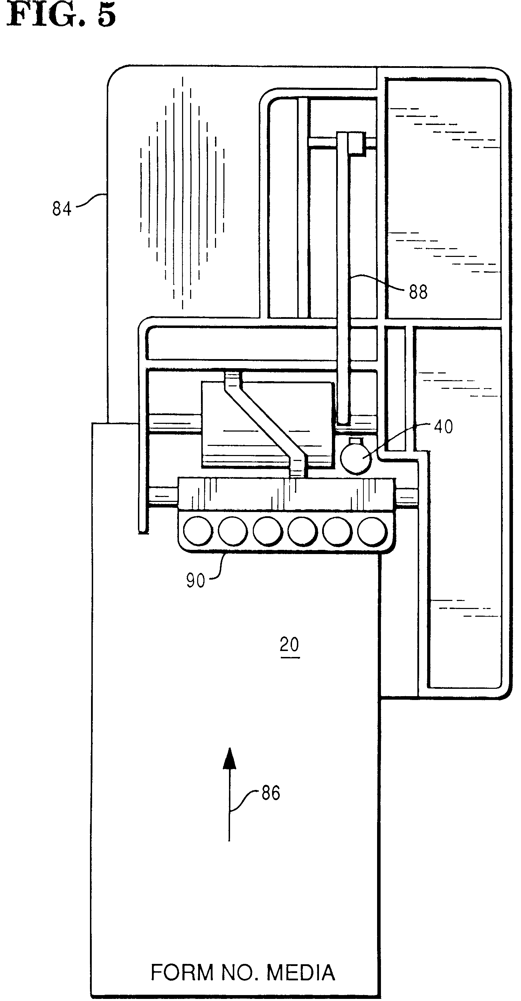

Referring now to Fig. 5, there is shown a top view of the printing station located in the terminal device which includes a table 84 on which is positioned the guest check or slip 20. The check 20 is driven inwardly in the direction as indicated by the arrow 86 by a suitable drive mechanism past the optical form sensor 40 and into engagement with a stop arm 88 which is selectively positioned by a solenoid (not shown). As described fully in U.S. Patent No. 4,259,569, the check member 20 is driven inwardly toward the printing station during which time the sensor 40 reads the bar code label 22 (Fig. 1) and includes the reading of the end-of-code bar code symbol 26 (Fig. 2B) after which time the driving mechanism is deenergized. A printing mechanism 90 positioned adjacent the top of the check member 20 is then operated to print out the required data on the check member. This sequence of operations is repeated each time a charge is to be made against the paying customers's account number and such charge is printed on the check member 20.

Fig. 6 shows a sample timing chart that includes a series of clock pulses 92 that are carried on line 74 (Fig. 3A). The microcontroller 46 turns the RDATA signal on line 72 low, as indicated at 94, and then waits for the clock pulses 92 from the terminal. The controller 46 outputs one data bit on the RDATA line 72 (Fig. 3A) for each clock pulse. As stated above, a character has 3 starting bits, indicated as $\bar{b}0$, $\bar{b}0$, $\bar{b}0$ and 7 data bits indicated as $\bar{b}0$, $\bar{b}1$, $\bar{b}2$, $\bar{b}3$, $\bar{b}4$, $\bar{b}5$, b6. The 7th data bit (b6) is always inverted by the controller 46. For each character, the terminal sends 10 clocks to the controller 46. Starting with the fourth clock, the controller 46 responds to each clock by sending back each data bit. After the tenth clock and after all 7 bits of the data have been sent out, the RDATA signal goes or stays high, as indicated at 96 (Fig. 6), and the controller 46 prepares for the next character. A maximum time period of 20 milliseconds is permitted for the reading of each character.

The feeding speed of each bar element of a check member 20 averages out to 0.38mm (0.015 inch) per 4 milliseconds so that the speed for reading 7 bar elements is 28 milliseconds. However, the process for printing the bar code symbols 24, the differences in the construction of the optical sensor 40, and the variations in the sensing circuit introduce a possible inaccuracy into the bar code reading system. As a result of this possible inaccuracy, the speed for the 7 bar elements could vary from 23.59 to 29.4 milliseconds. Although the detected bar width ratio of a black bar element and a white bar element could vary in a range from 7 to 1 up to 1 to 7, a combination of a black bar element and a white bar element would vary only from 6.74 to 8.4 milliseconds, as illustrated in Fig. 7. Since the sensor 40 does not know the bar width when reading a bar code symbol, Fig. 7 illustrates a worst case in the range of bar widths of black bar elements and white bar elements.

In continuing with the description of the bar code reading system, a bar code number will be referred to as a bar code character. Since a bar code character never starts with an end character, the ending bar (the 7th bar) of each regular character always has a black bar (Fig. 2A). It is to be noted that the speed for reading 6 bar elements varies from 22.5 to 25.2 milliseconds. If the timer-duration is set at 23.5 milliseconds, it is seen that at the end of the timing period, the 7th bar can be detected. The speed for reading a character can be recorded by the controller 46. The measured speed then becomes a time reference for detecting characters which follow and which include an end character. It is noted that there is no black ending bar in the end character (Fig. 2B). Therefore, the use of a measured time reference is the only way to detect an end character. The program provides means to determine how long it takes to read one character as well as how long it takes to read one bar of a character. In Fig. 2B it is noted that the beginning of a character is a black bar and the ending is a white bar. In this regard, the last character is reversed so it is necessary to obtain the timing of the last character.

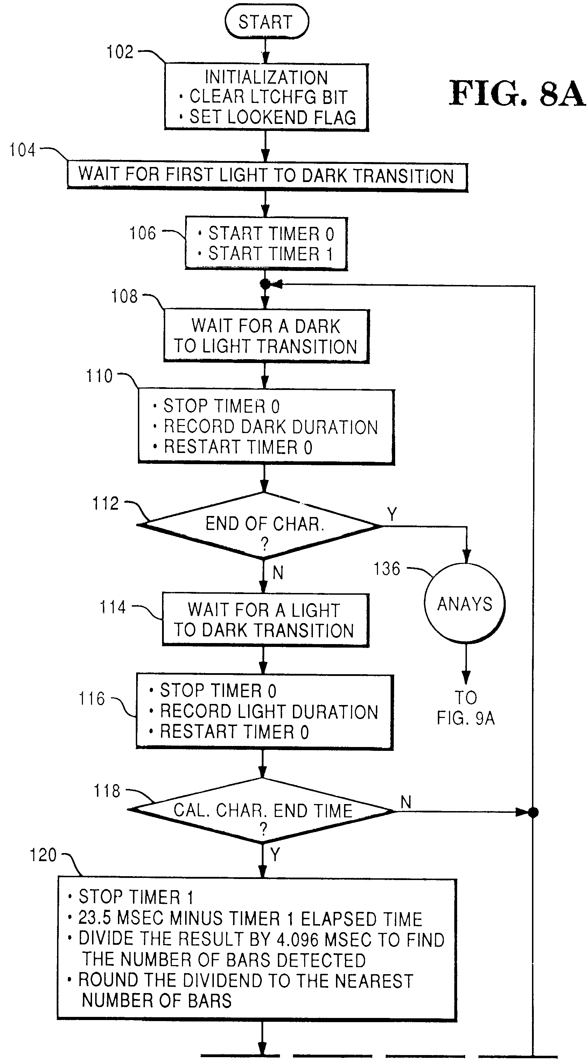

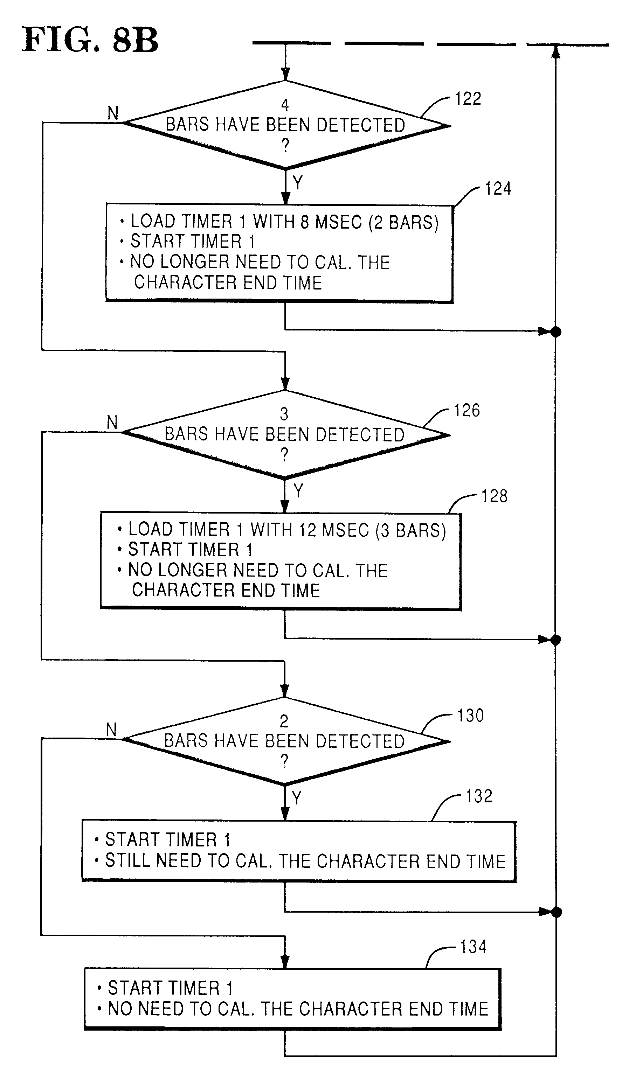

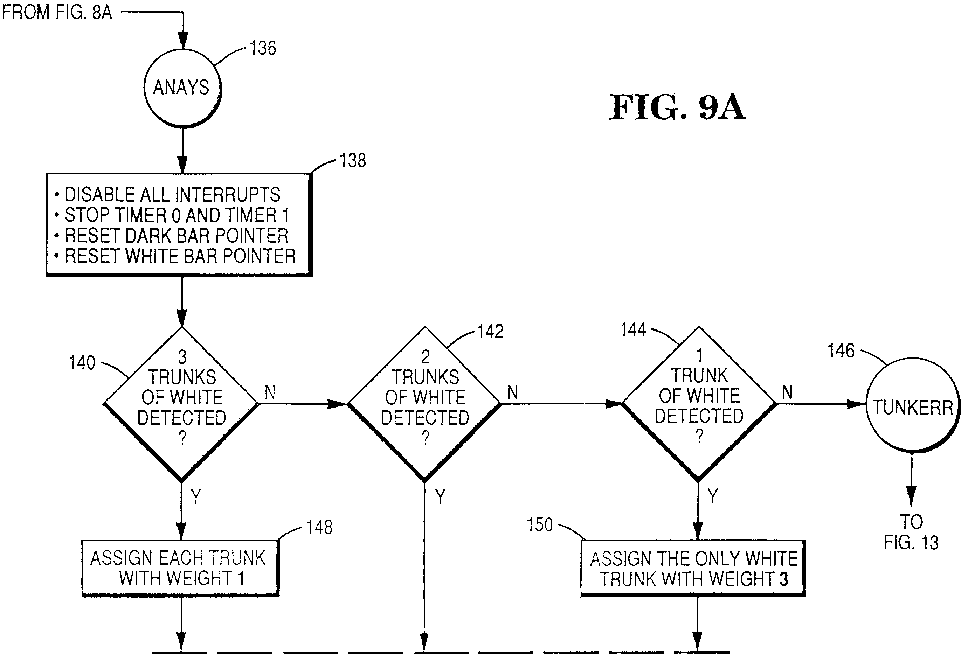

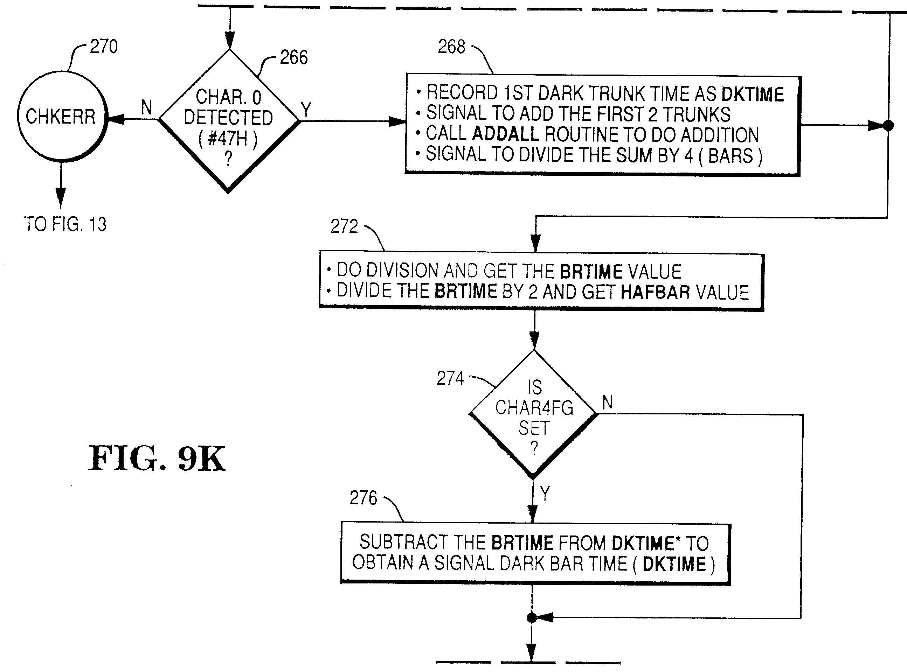

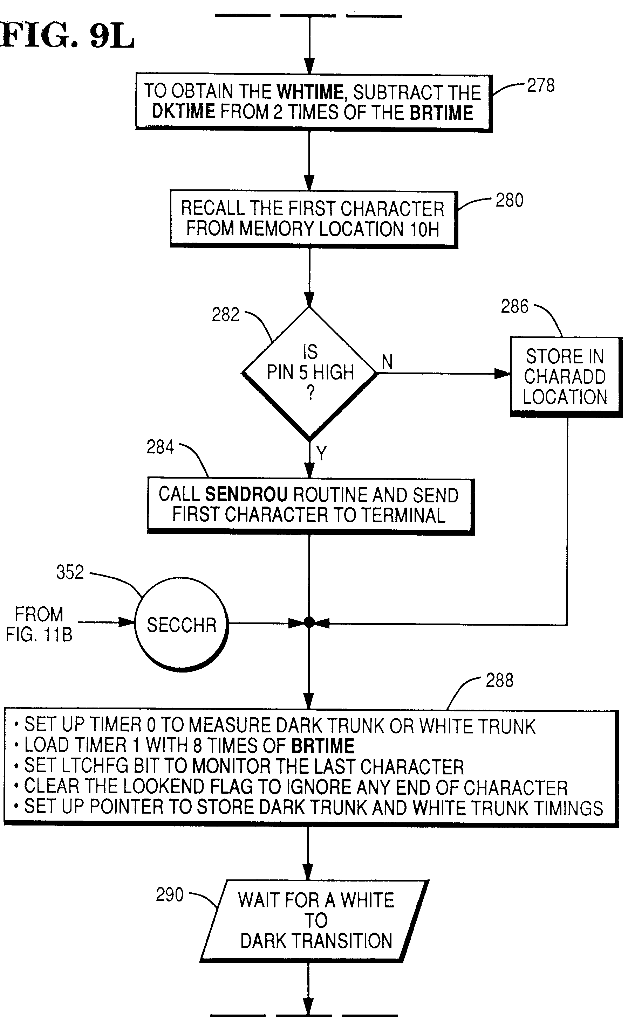

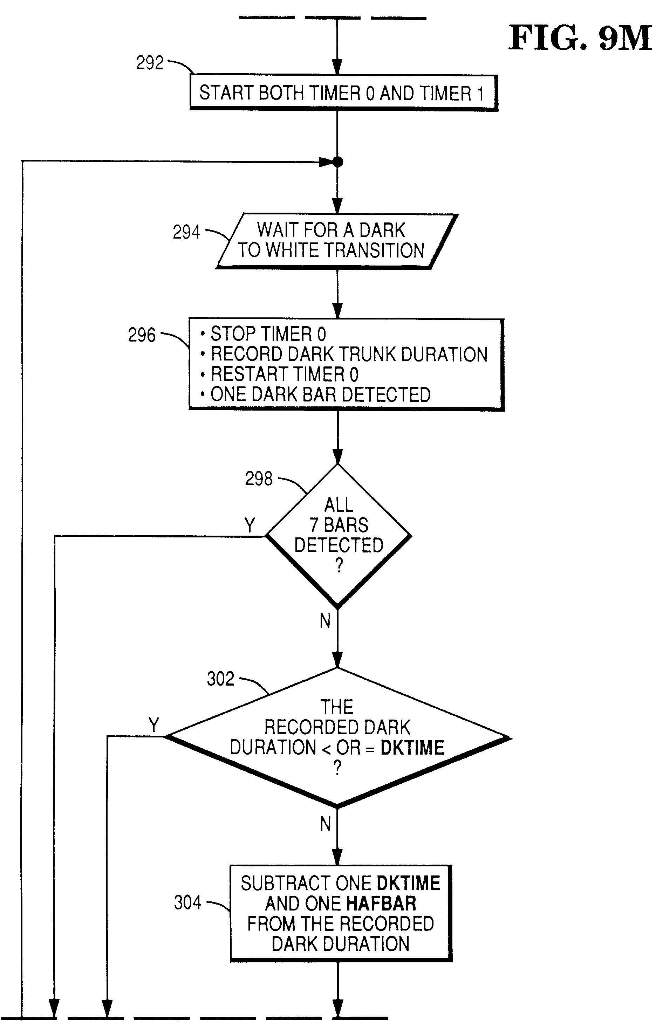

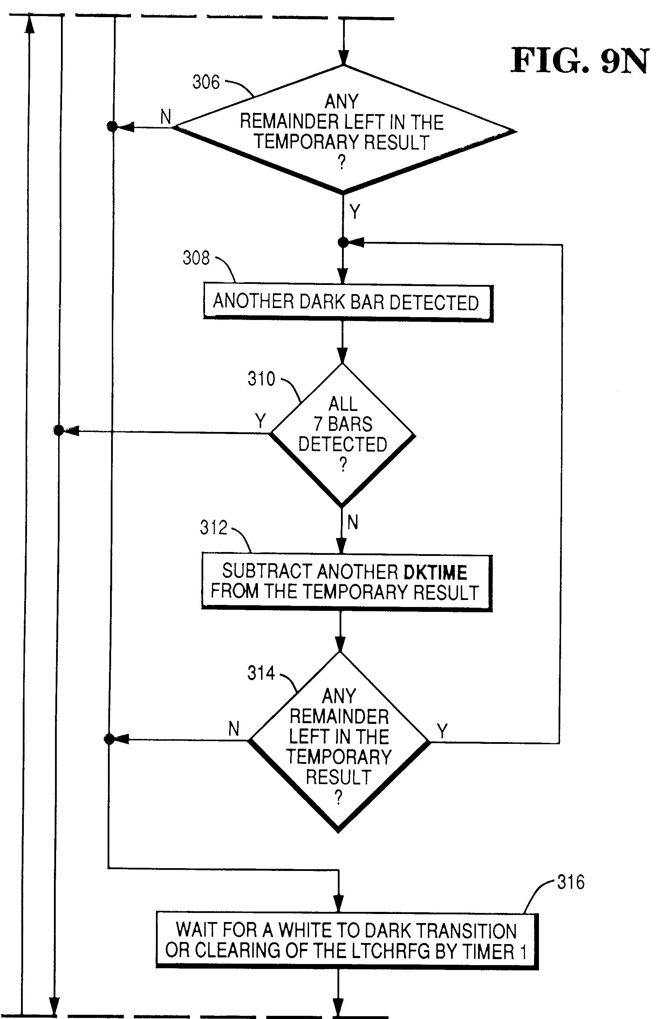

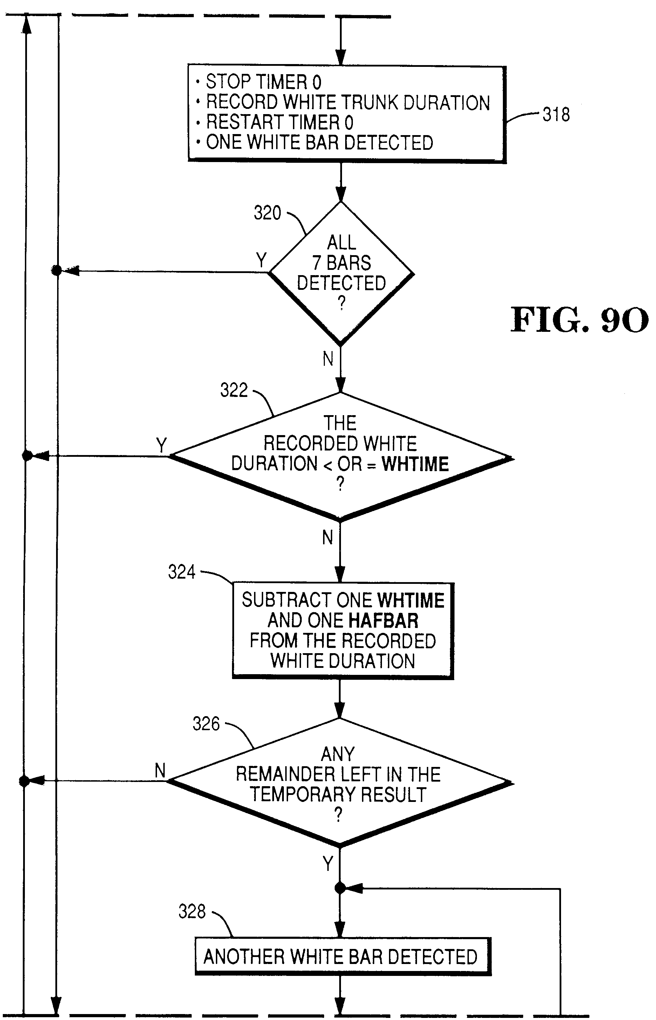

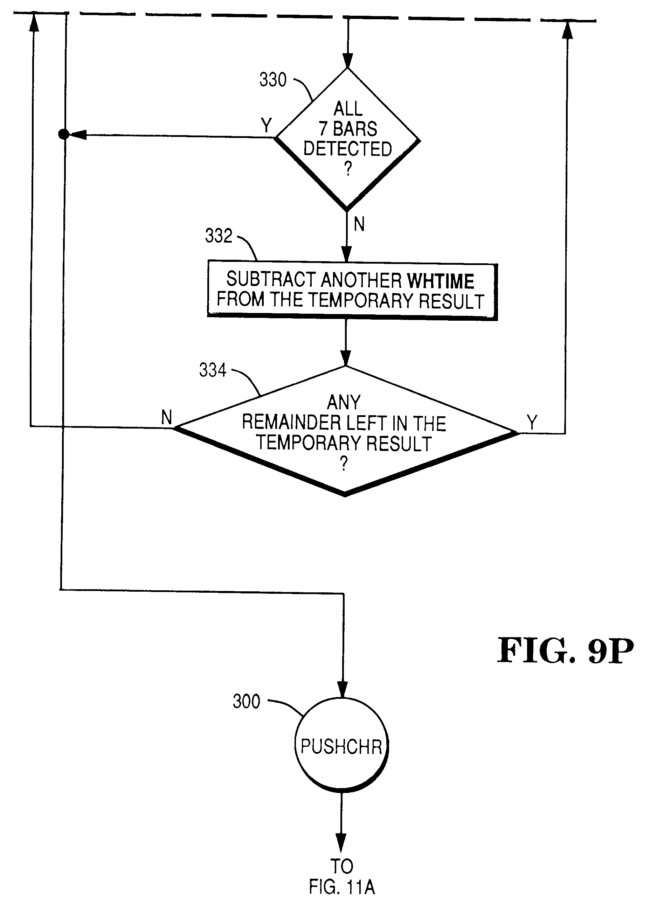

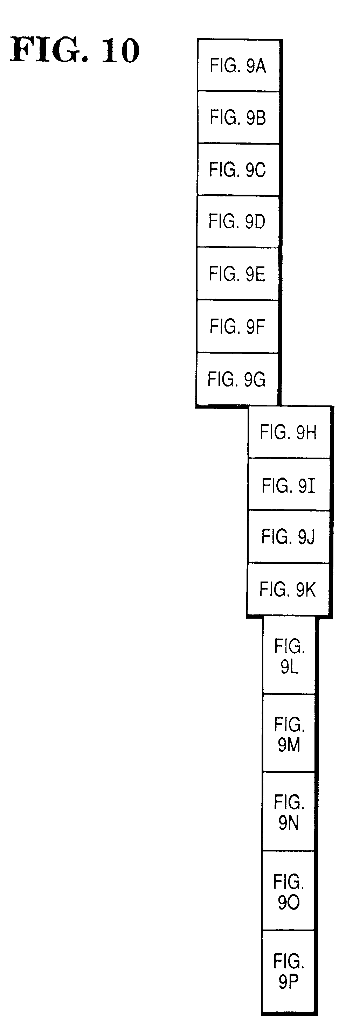

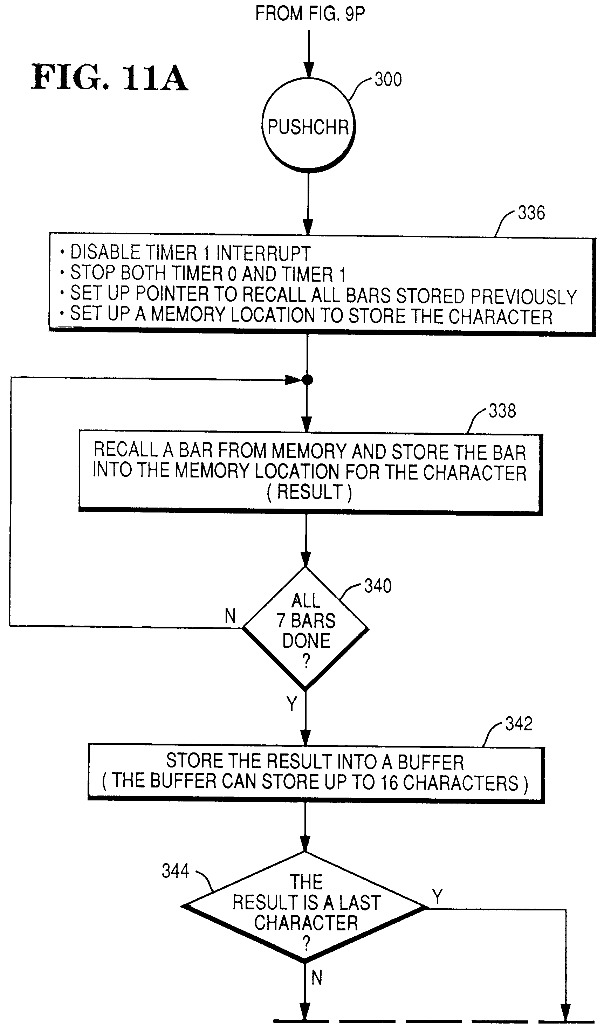

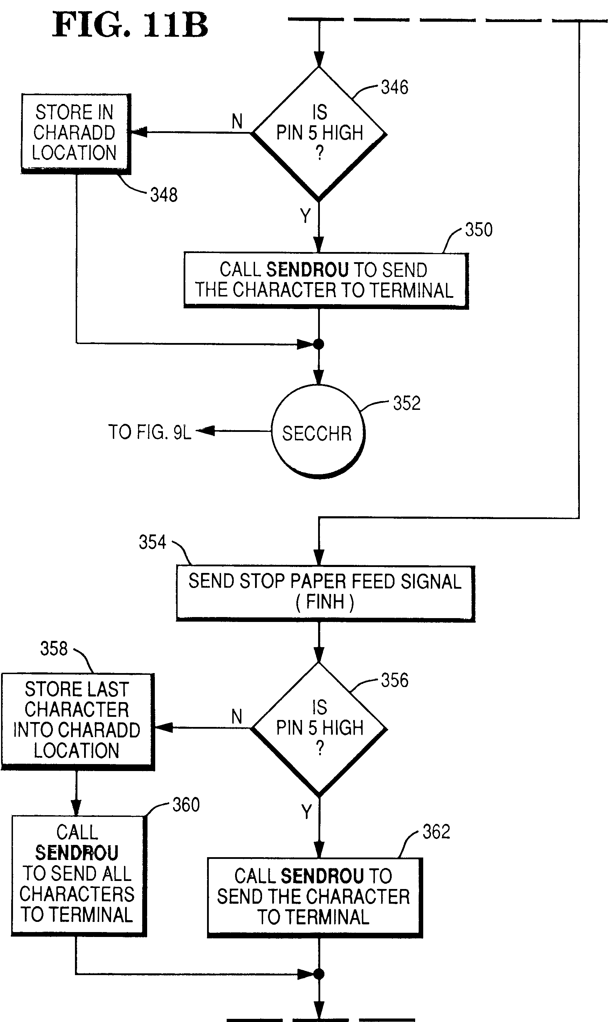

Referring now to Figs. 8A and 8B, the process of the bar code decoding control system is initialized, the LTCHFG (last character flag) bit is cleared, the LOOKEND (look for end of character) flag is set (block 102) and the controller 46 waits for the first light to dark transition (block 104). The controller 46 has two timers which are referred to as timer 0 and timer 1. Timer 0 is used to measure the time duration of one bar element or of combined bar elements which is called a trunk. Each bar element is read in four milliseconds. A trunk always contains one or a plurality of bar elements (black or white). In the program of the invention, when the sensor 40 sees a white to dark transition and then sees a dark to white transition, the controller 46 does not know the number of black bar elements that are located or that appear between these two transitions. Therefore, it is called a dark trunk. In the program, a similar operation or arrangement applies to a white trunk. In an ANAYS (analysis) program, later described, each white or dark trunk has a weight of 3, 2 or 1 which means the trunk has 3, 2 or 1 bar elements. The timer 0 and the timer 1 are started (block 106), the timer 1 being loaded with 23.5 milliseconds of time at the start of the program. The controller 46 waits for a dark to light transition (block 108), the timer 0 is stopped, the time of reading a dark duration is recorded, and the timer 0 is restarted (block 110). An inquiry is made at this point in time as to whether or not the program is reading the end of a character (block 112). If the program is at the end of a character (block 112), the process goes to block 136 (Fig. 9A) for an ANAYS (analysis) step.

If not at the end of a character (the LOOKEND flag is still set), the controller 46 waits for a light to dark transition (block 114), the timer 0 is stopped, the time of reading a light duration is recorded, and the timer 0 is restarted (block 116). An inquiry is made at this point in time as whether or not to calculate the character end time (block 118). If the decision is made not to calculate the character end time, the program returns to block 108 to repeat the several steps. If the decision is made to calculate the character end time, timer 1 is stopped and the initial loading time of 23.5 milliseconds is reduced by the elapsed time of timer 1. After a black bar trunk and a white bar trunk are measured by timer 0, the resulting time duration is divided by 4.096 milliseconds to determine how many bar elements have passed and been detected by the optical sensor 40 (block 120). The dividend is rounded to the nearest number of bars.

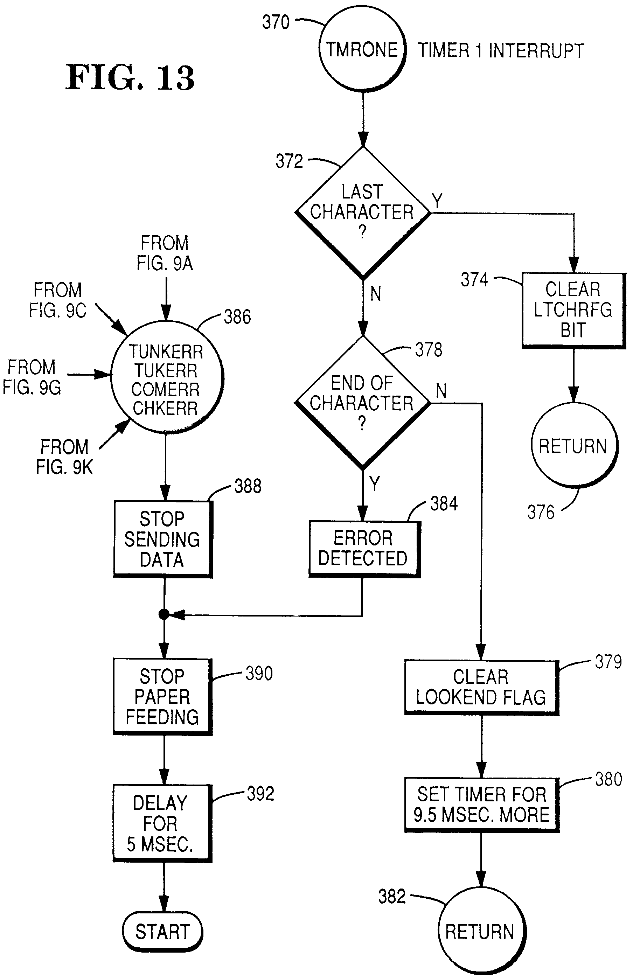

The process continues in a manner to determine how many bar elements have been detected. An inquiry is made as to whether or not 4 bar elements have been detected (block 122). If so, timer 1 is loaded with 8 milliseconds and timer 1 is started. There is no need to calculate the character end time (block 124) and the program returns to block 108 to repeat the several steps. If 4 bar elements have not been detected, an inquiry is made as to whether or not 3 bar elements have been detected (block 126). If so, timer 1 is loaded with 12 milliseconds and timer 1 is started. There is no need to calculate the character end time (block 128) and the program returns to block 108 to repeat the several steps. If 3 bar elements have not been detected, an inquiry is made as to whether or not 2 bar elements have been detected (block 130). If so, timer 1 is started and there is a need to calculate the character end time (block 132) and the program returns to block 108. If 2 bar elements have not been detected, the timer 1 is started and there is no need to calculate the character end time because 5 or 6 bar elements have been detected (block 134) and the program returns to block 108. It is to be noted that if timer 1 expired (refer to Fig. 13, block 370) before 6 bar elements have been detected, timer 1 brill clear the LOOKEND flag and will continue timing until a dark to light transition is detected. This means that 7 bar elements have been detected, the end of the character has been reached, and the program goes to block 136 (Fig. 9A) which is the ANAYS (analysis) step. At this time, the number of white trunks and dark trunks have been recorded and their respective time durations have also been recorded. A white bar pointer points recorded white trunk locations and a dark bar pointer points recorded dark trunk locations.

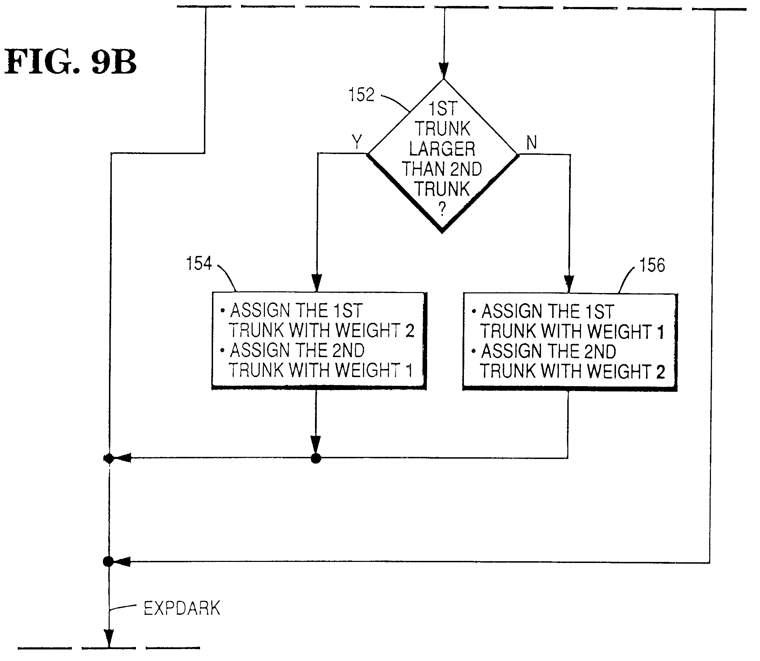

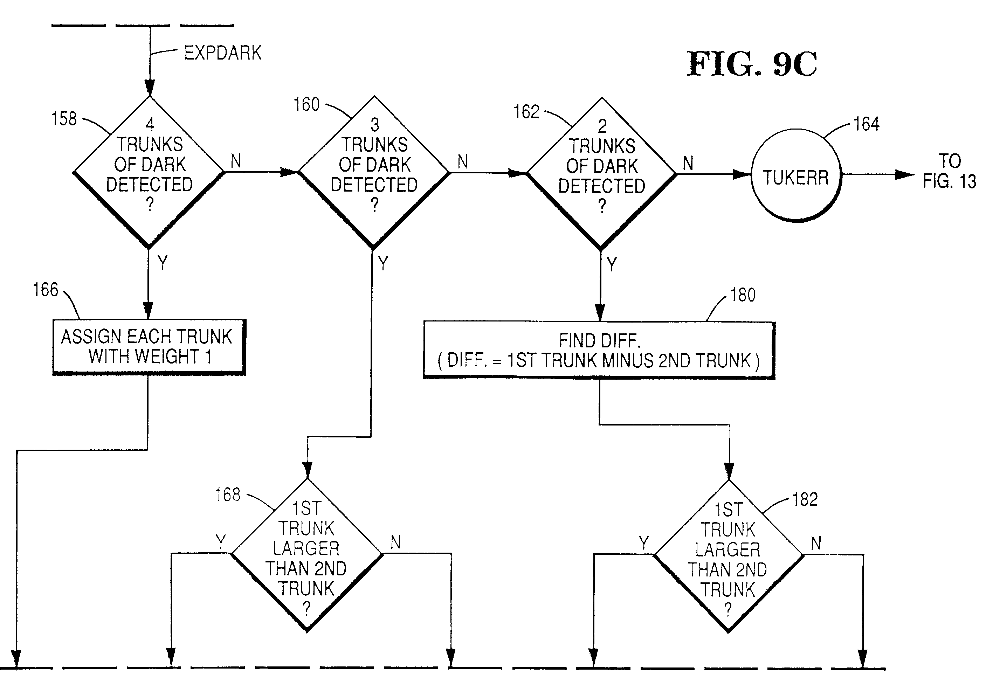

Referring now to Fig. 9A, the program moves through the ANAYS (analysis) step (block 136) and disables all interrupts, stops timers 0 and 1, and resets the dark bar pointer and the white bar pointer (block 138). An inquiry is made as to whether or not 3 trunks of white bars are detected (block 140). If so, each trunk is assigned a weight of 1 (block 148). It should be noted that after 7 bar elements have been detected, the trunks of the black bars and the white bars are recorded. It should also be noted that there are only three trunk combinations in the regular characters (Fig. 2A), namely, two black bars and one white bar, three black bars and two white bars, or four black bars and three white bars. Based on the recorded data, the character can be assigned different weights. If, as noted above, 3 trunks of white bars are not detected, an inquiry is made as to whether or not 2 trunks of white bars are detected (block 142). If not, an inquiry is made as to whether or not 1 trunk of white bars is detected (block 144). If not, the program goes into an error routine (block 146) which will be described later. If 2 trunks of white bars are detected (block 142), an inquiry is made (Fig. 9B) as to whether or not the first trunk is larger than the second trunk (block 152). If so, the first trunk is assigned a weight of 2 and the second trunk is assigned a weight of 1 (block 154). If the first trunk is not larger than the second trunk, the first trunk is assigned a weight of 1 and the second trunk is assigned a weight of 2 (block 156). If 1 trunk of a white bar is detected (block 144), the only white trunk is assigned a weight of 3. After completion of the steps in blocks 148, 150, 154 and 156, the program then continues to an EXPDARK (expanded dark) routine (Fig. 9C).

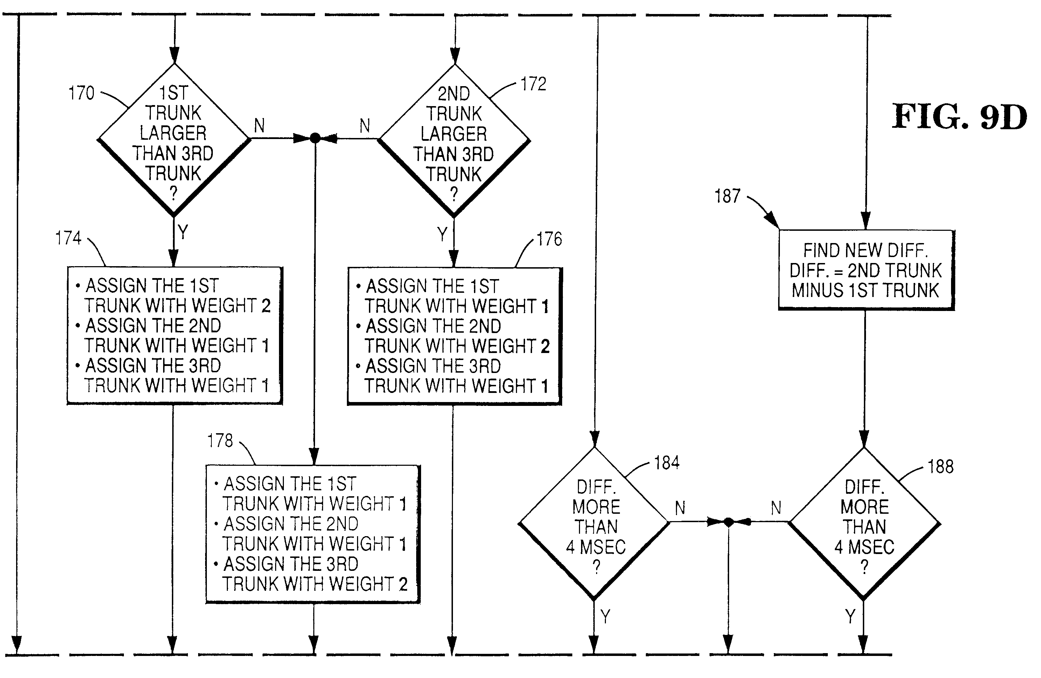

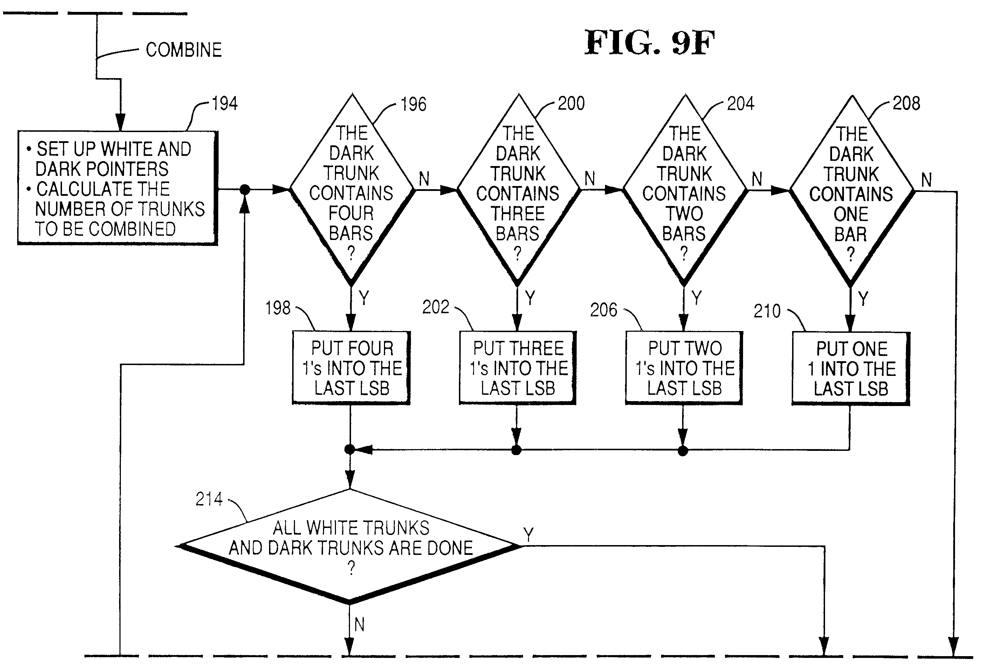

In the EXPDARK (expanded dark) routine (Fig. 9C), 3 trunks of black bars are assigned a weight of 1, and in the ANAYS (analysis) routine 3 trunks of white bars are assigned a weight of 1. If white bar trunks other than the above combinations are detected, the program goes into the TUNKERR routine (block 146) which is an error handling routine and also shown in block 386 in Fig. 13. In the EXPDARK routine (Fig. 9C), an inquiry is made as to whether or not 4 trunks of dark bars are detected (block 158). If not, an inquiry is made as to whether or not 3 trunks of dark bars are detected (block 160). If not, an inquiry is made as to whether or not 2 trunks of dark bars are detected (block 162). If not, the program goes into a TUKERR routine (block 164) and also shown in block 386 in Fig. 13. If 4 trunks of dark bars are detected (block 158), each trunk is assigned a weight of 1 (block 166) and the program goes into a COMBINE routine, starting in Fig. 9F and later described. If 3 trunks of dark bars are detected (block 160), an inquiry is made as to whether or not the first trunk of dark bars is larger than the second trunk of dark bars (block 168). If so, an inquiry is made (Fig. 9D) as to whether or not the first trunk is larger than the third trunk (block 170). If the first trunk is not larger than the second trunk, an inquiry is made as to whether or not the second trunk is larger than the third trunk (block 172). If the first trunk is larger than the third trunk (block 170), the program assigns the first trunk a weight of 2, assigns the second trunk a weight of 1, and assigns the third trunk a weight of 1, (block 174) and then continues to the COMBINE routine. If the second trunk is larger than the third trunk (block 172), the program assigns the first trunk a weight of 1, assigns the second trunk a weight of 2, and assigns the third trunk a weight of 1 (block 176) and then continues to the COMBINE routine. If the first trunk is not larger than the third trunk (block 170) and/or the second trunk is not larger than the third trunk (block 172), the program assigns the first trunk a weight of 1, assigns the second trunk a weight of 1, and assigns the third trunk a weight of 2 (block 178) and then continues to the COMBINE routine (Fig. 9F).

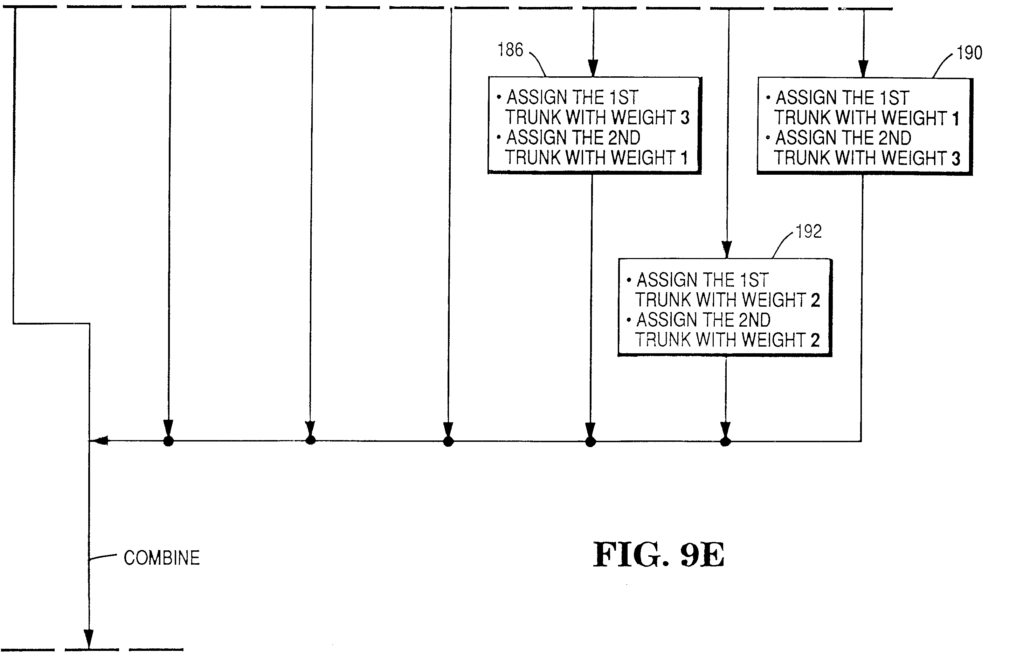

Referring back to the inquiry block 162, if 2 trunks of dark bars are detected, a difference is found wherein the difference is the first trunk less the second trunk (block 180). An inquiry is then made as to whether or not the first trunk is larger than the second trunk (block 182). If so, an inquiry is made as to whether or not the difference is more than 4 milliseconds (block 184). If the difference is more than 4 milliseconds, the program (Fig. 9E) assigns the first trunk a weight of 3 and assigns the second trunk a weight of 1 (block 186) and then continues to the COMBINE routine. If the first trunk is not larger than the second trunk (block 182), a new difference is found wherein the difference is the second trunk less the first trunk (block 187). An inquiry is then made as to whether or not the new difference is more than 4 milliseconds (block 188). If the difference is more than 4 milliseconds, the program assigns the first trunk a weight of 1 and assigns the second trunk a weight of 3 (block 190) and then continues to the COMBINE routine. If the difference is not more than 4 milliseconds in either step indicated by block 184 and 188, the program assigns the first trunk a weight of 2 and assigns the second trunk a weight of 2 (block 192) and then continues to the COMBINE routine (Fig. 9F).

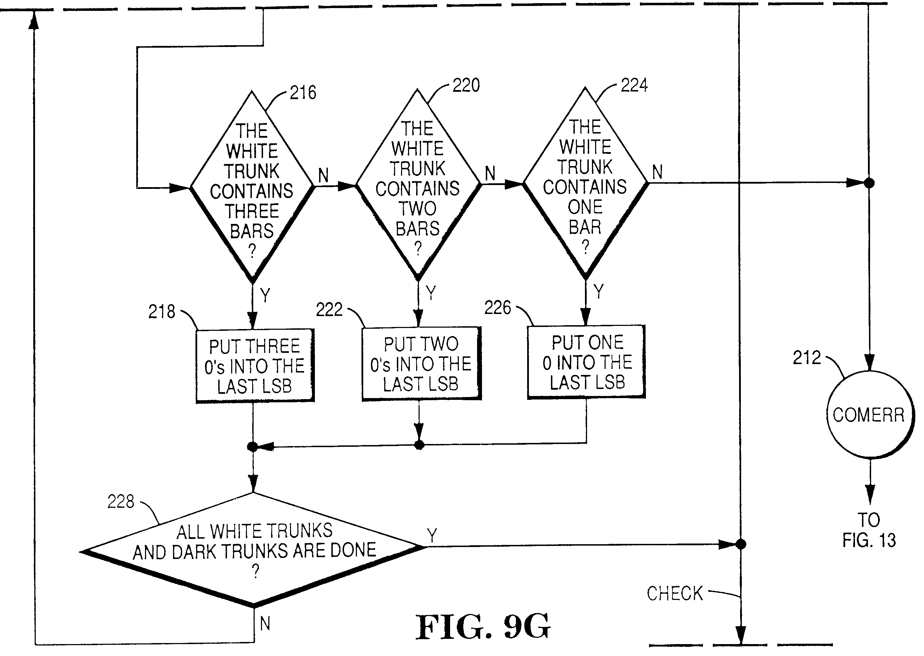

Referring now to the COMBINE routine and starting with Fig. 9F, the program sets up white and dark pointers and calculates the number of trunks to be combined (block 194). An inquiry is made as to whether or not the dark trunk contains four bars (block 196). If so, the program puts four 1's into the last four LSB (least significant bits), as indicated in Block 198. If the dark trunk does not contain four bars, an inquiry is made as to whether or not the dark trunk contains three bars (block 200). If so, the program puts three 1's into the last three LSB (block 202). If the dark trunk does not contain three bars, an inquiry is made as to whether or not the dark trunk contains two bars (block 204). If so, the program puts two 1's into the last two LSB (block 206). If the dark trunk does not contain two bars, an inquiry is made as to whether or not the dark trunk contains one bar (block 208). If so, the program puts one 1 into the last LSB (block 210). If the dark trunk does not contain one bar, the program goes into a COMERR (combined error) routine, as indicated by Block 212 (Fig. 9G).

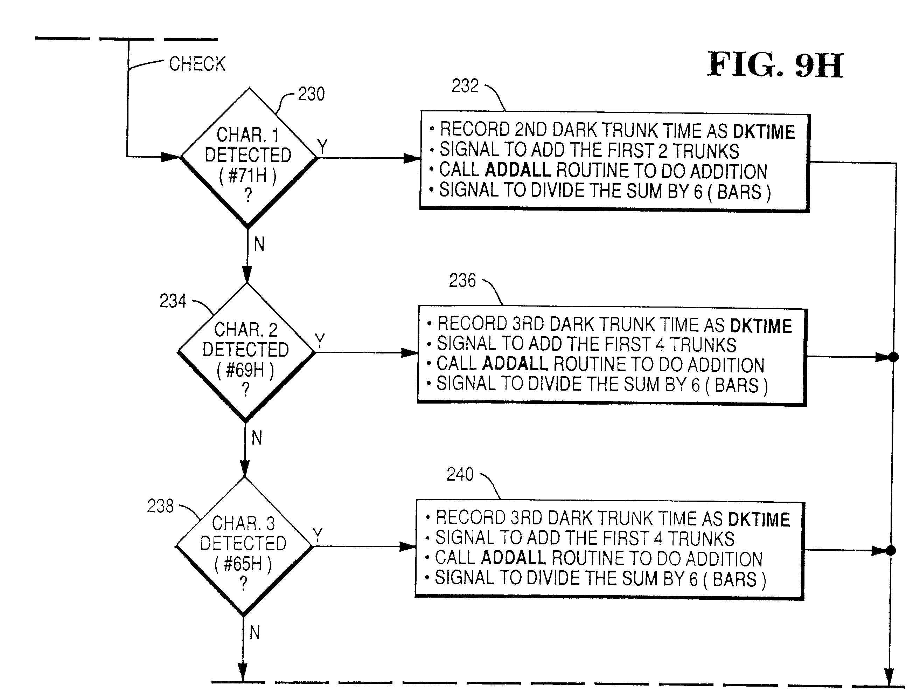

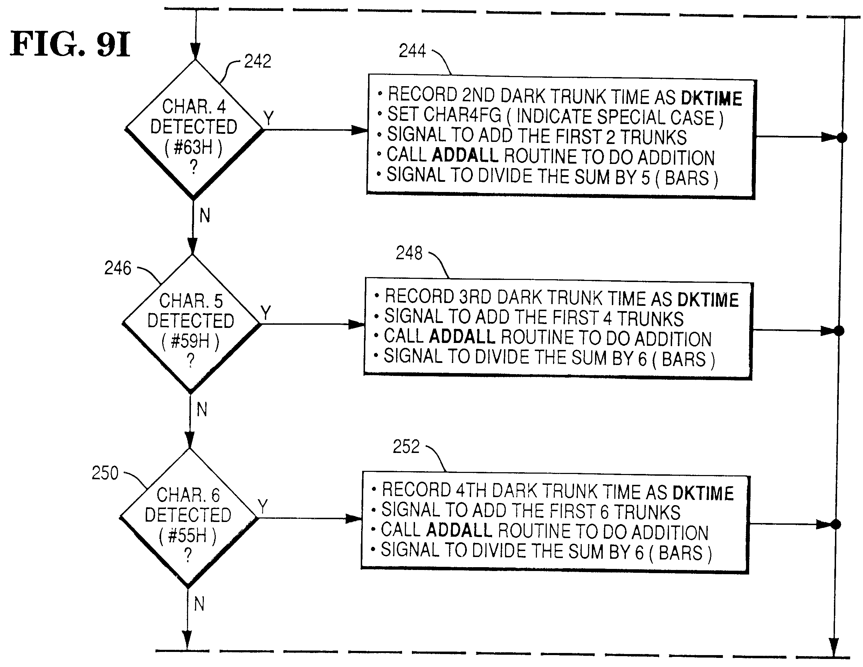

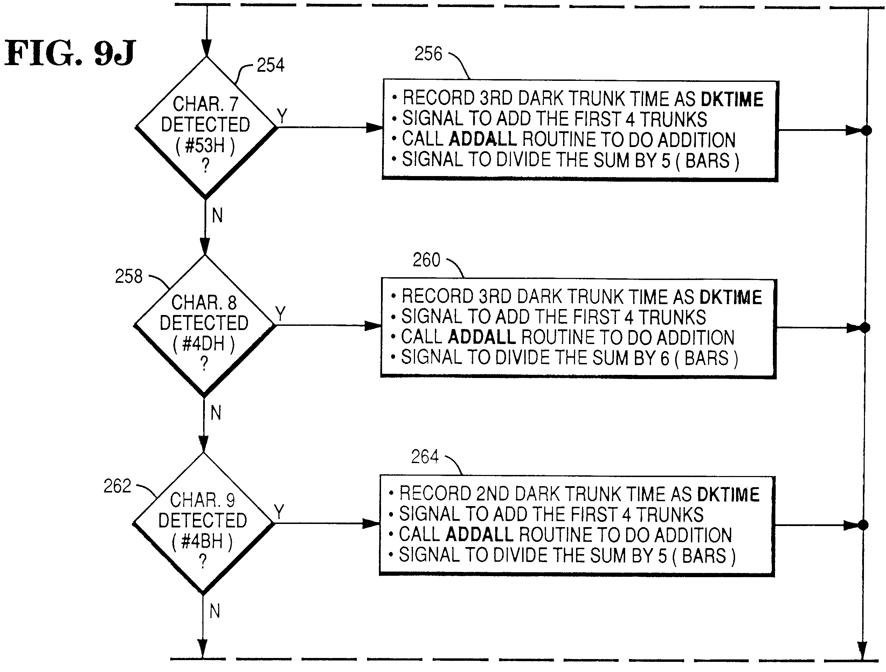

After the program puts the respective 1's into the LSB (blocks 198, 202, 206, 210), an inquiry is made as to whether or not all white trunks and dark trunks are done (block 214). If so, the program proceeds to a CHECK routine, starting in Fig. 9H and later described. If all white trunks and dark trunks are not done, an inquiry is made (Fig. 9G) as to whether or not the white trunk contains three bars (block 216). If so, the program puts three 0's into the last three LSB (block 218). If the white trunk does not contain three bars, an inquiry is made as to whether or not the white trunk contains two bars (block 220). If so, the program puts two 0's into the last two LSB (block 222). If the white trunk does not contain two bars, an inquiry is made as to whether or not the white trunk contains one bar (block 224). If so, the program puts one 0 into the last LSB (block 226). After the program puts the respective 0's into the last LSB (blocks 218, 222, 226), an inquiry is made as to whether or not all white trunks and dark trunks are done (block 228). If not, the program returns to the several inquiries as to whether or not the dark trunk contains the respective bars (blocks 196, 200, 204, 208). If all white trunks and dark trunks are done, the program goes to the CHECK routine starting in Fig. 9H.

In the CHECK routine (Fig. 9H), an inquiry is made as to whether or not character 1 is detected (block 230). The notation of (#71H) in block 230 refers to the binary hex code for character 1. If so, the program records the second dark trunk time as DKTIME (the time equivalent of reading a dark bar having 0.33mm to 0.56mm (0.013 to 0.022 inch) in width), provides a signal to add the first two trunks, calls an ADDALL routine to do the addition, and provides a signal to divide the sum by 6 (block 232). If character 1 is not detected, an inquiry is made as to whether or not character 2 is detected (block 234). If so, the program records the third dark trunk time as DKTIME, provides a signal to add the first 4 trunks, calls the ADDALL routine to do the addition, and provides the signal to divide the sum by 6 (block 236). If character 2 is not detected, an inquiry is made as to whether or not character 3 is detected (block 238). If so, the program records the third dark trunk time as DKTIME, provides the signal to add the first 4 trunks, calls the ADDALL routine to do the addition, and provides the signal to divide the sum by 6 (block 240). If character 3 is not detected, an inquiry is made (Fig. 9I) as to whether or not character 4 is detected (block 242). If so, the program records the second dark trunk time as DKTIME, sets a CHAR4FG (character 4 flag) step to indicate a special case, provides the signal to add the first 2 trunks, calls the ADDALL routine to do the addition, and provides a signal to divide the sum by 5 (block 244). If character 4 is not detected, an inquiry is made as to whether or not character 5 is detected (block 246). If so, the program records the third dark trunk time as DKTIME, provides the signal to add the first 4 trunks, calls the ADDALL routine to do the addition, and provides the signal to divide the sum by 6 (block 248). If character 5 is not detected, an inquiry is made as to whether or not character 6 is detected (block 250). If so, the program records the fourth dark trunk time as DKTIME, provides a signal to add the first 6 trunks, calls the ADDALL routine to do the addition, and provides the signal to divide the sum by 6 (block 252). If character 6 is not detected, an inquiry is made (Fig. 9J) as to whether or not character 7 is detected (block 254). If so, the program records the third dark trunk time as DKTIME, provides the signal to add the first 4 trunks, calls the ADDALL routine to do the addition, and provides the signal to divide the sum by 5 (block 256). If character 7 is not detected, an inquiry is made as to whether or not character 8 is detected (block 258). If so, the program records the third dark trunk time as DKTIME, provides the signal to add the first 4 trunks, calls the ADDALL routine to do the addition, and provides the signal to divide the sum by 6 (block 260). If character 8 is not detected, an inquiry is made as to whether or not character 9 is detected (block 262). If so, the program records the second dark trunk time as DKTIME, provides the signal to add the first 4 trunks, calls the ADDALL routine to do the addition, and provides the signal to divide the sum by 5 (block 264). If character 9 is not detected, an inquiry is made (Fig. 9K) as to whether or not character 0 is detected (block 266). If so, the program records the first dark trunk time as DKTIME, provides the signal to add the first 2 trunks, calls the ADDALL routine to do the addition, and provides a signal to divide the sum by 4 (block 268). If character 0 is not detected, the program goes to a CHKERR (check error) routine, indicated at block 270 and continued in Fig. 13. The number notations indicated as #69H, #65H, #63H, #59H, #55H, #53H, #4DH, #4BH and #47H refer to the binary hex codes for the respective characters 2, 3, 4, 5, 6, 7, 8, 9 and 0 shown in Fig. 2A.

In reviewing the program in Figs. 9H to 9K, inclusive, it is preferred to know how many bars will be used to divide a sum of trunks. Referring back to Fig. 2A, it is seen that the character 1 has one black trunk and one white trunk which are detected and stored in accordance with the flow chart of Figs. 8A and 8B. Exclusive of the last dark trunk, there are 6 bar elements within the one black trunk and the one white trunk, so that the sum of these two trunks is divided by 6 (Fig. 9H). In the case of the character 0 (Fig. 2A), it is seen that such character has one dark trunk and one white trunk with 4 bar elements within these trunks, so that the sum of these trunks is divided by 4 (Fig. 9K). In the case of character 4, there are 5 bar elements within the one dark trunk and the one white trunk, so the sum is divided by 5 (Fig. 9I). In similar manner and to complete the detection of all the characters, it is seen that in the case of each of characters 2, 3, 5, 6 and 8, the sum is divided by 6 (Figs. 9H, 9I and 9J), and in the case of each of characters 7 and 9, the sum is divided by 5 (Fig. 9J).

After the program performs the operations of recording a dark trunk time as DKTIME, providing the signal to add the trunks, calling the ADDALL routine to do the addition, and providing the signal to divide the sum by a number, as described for each of the characters in respective blocks 232, 236, 240, 244, 248, 252, 256, 260, 264, 268, the program goes to the step in Block 272 (Fig. 9K). The program does the division and obtains a BRTIME value. BRTIME is the time equivalent of a 0.38mm (0.015 inch) wide bar. The program then divides the BRTIME by 2 and obtains a HAFBAR value (block 272). HAFBAR is the BRTIME value divided by 2. An inquiry is made as to whether or not the special case of setting the character CHAR4FG (character 4 flag) is made (block 274). The program to set character CHAR4FG to indicate a special case is noted in block 244 above. If CHAR4FG is set, the program subtracts the BRTIME from DKTIME* to obtain a signal dark bar time (block 276). DKTIME* is the original DRTIME value of the character 4 which contains 2 dark bars. If the CHAR4FG is not set, the process does not subtract the BRTIME from DRTIME*.

Continuing on to Fig. 9L, the WHTIME is obtained by subtracting the DKTIME from twice the BRTIME (block 278). WHTIME is the time equivalent of reading a white bar which is 0.43mm to 0.20mm (0.017 to 0.008 inch) in width. As noted above, a dark bar may have a width of 0.33mm to 0.56mm (0.013 to 0.022 inch). Since the total bar width of a dark bar element and a white bar element is constant at 0.76mm (0.030 inch), the dark bar width can vary from 0.33mm to 0.56mm (0.013 to 0.022 inch) and the white bar width can then vary from 0.43mm to 0.20mm (0.017 to 0.008 inch). The program then recalls the first character from a memory location 10H (block 280). An inquiry is made as to whether or not pin 5 of the microcontroller 46 is high (block 282). If so, the program calls a SENDROU routine and sends the first character to the terminal (block 284). If pin 5 of the controller 46 is not high, the program provides a store in CHARADD (character add) location (block 286).

The program continues to block 288 where the timer 0 is set up to measure a dark trunk or a white trunk, timer 1 is loaded with 8 times of BRTIME (the time equivalent of a 0.38mm (0.015 inch) wide bar), the LTCHFG (last character flag) bit is set to monitor the last character and the LOOKEND (look for end of character) flag is cleared to ignore any end of character. The program also sets up the pointer to store dark trunk or white trunk timings and then waits for a white to dark transition (block 290). Continuing on to Fig. 9M, timer 0 and timer 1 are started (block 292). The program now waits for a dark to white transition (block 294), the timer 0 is stopped, the dark trunk duration is recorded, timer 0 is restarted, and one dark bar is detected (block 296). An inquiry is then made as to whether or not all 7 bars are detected (block 298). If so, the program goes to a PUSHCHR (push character) routine (block 300), illustrated in Fig. 9P. If all 7 bars are not detected, an inquiry is made as to whether or not the recorded dark duration is less than or equal to DKTIME (block 302). If not, the program subtracts one DKTIME and one HAFBAR from the recorded dark duration (block 304). An inquiry is then made as to whether or not any remainder is left in the temporary result (block 306) shown in Fig. 9N. If so, another dark bar has been detected which means this dark bar trunk has more than one dark bar element (block 308). An inquiry is again made as to whether or not all 7 bars are detected (block 310). If not, the program subtracts another DKTIME from the temporary result (block 312). An inquiry is again made as to whether or not any remainder is left in the temporary result (block 314). If so, the program returns to find that another dark bar element has been detected (block 308).

If the answer to the inquiry as to whether or not the recorded duration is less than or equal to DRTIME (block 302) is positive, the program waits for a white to dark transition or clearing of the LTCHRFG by timer 1 (block 316). If the answer to the inquiry as to whether or not there is any remainder left in the temporary result (block 306) after subtracting one DKTIME and one HAFBAR from the recorded dark duration (block 304) is negative, the program also waits for a white to dark transition or clearing by timer 1 (block 316). If the answer to the inquiry as to whether or not there is any remainder left in the temporary result (block 314) after subtracting another DRTIME from the temporary result (block 312) is negative, the program also waits for a white to dark transition or clearing of the LTCHFG by timer 1 (block 316). If the answer to the inquiry as to whether or not all 7 bars are detected (block 310) after another dark bar is detected (block 308) is positive, the program goes to the PUSHCHR routine (block 300) in Fig. 9P.

After the program waits for a white to dark transition or clearing of the LTCHRFG by timer 1 (block 316), the program continues in Fig. 9O. The timer 0 is stopped, the duration of the white trunk is recorded, the timer 0 is restarted, and one white bar is detected (block 318). An inquiry is then made as to whether or not all 7 bars are detected (block 320). If so, the program goes to the PUSHCH routine (block 300), shown in Fig. 9P. If all 7 bars are not detected, an inquiry is made as to whether or not the recorded white duration is less than or equal to WHTIME (block 322). If not, the program subtracts one WHTIME and one HAFBAR from the recorded white duration (block 324). An inquiry is made as to whether or not any remainder is left in the temporary result (block 326). If so, another white bar element has been detected (block 328) which means that this white bar trunk has more than one white bar element. Continuing on to Fig. 9P, an inquiry is again made as to whether or not all 7 bars are detected (block 330). If not, the program subtracts another WHTIME from the temporary result (block 332). An inquiry is made as to whether or not there is any remainder left in the temporary result (block 334). If so, the program returns to find that another white bar has been detected (block 328).

If the answer to the inquiry as to whether or not all 7 bars are detected (block 320) after the timer 0 is stopped and restarted and one white bar is detected (block 318) is positive, the program goes to the PUSHCHR routine (block 300) in Fig. 9P. If the answer to the inquiry as to whether or not the recorded white duration is less than or equal to WHTIME (block 322) is positive, the program returns to wait for a dark to white transition (block 294). The program also returns to wait for a dark to white transition (block 294) if there is no remainder left in the temporary result (blocks 326 and 334). If the answer as to whether or not all 7 bars are detected (block 330) after another white bar is detected (block 328) is positive, the program goes to the PUSHCHR routine (block 300) in Fig. 9P. The PUSHCHR (push character) routine relocates those detected bar elements (a completed bar code character) and sends the signals to the terminal. The PUSHCHR routine also puts the character into a buffer along with other detected and stored characters and sends all of the signals to the terminal when pin 5 of the controller 46 is low.

As briefly described above, Fig. 10 is the drawing arrangement of Figs. 9A through 9P, inclusive. Fig. 10 also shows the orientation of these figures.

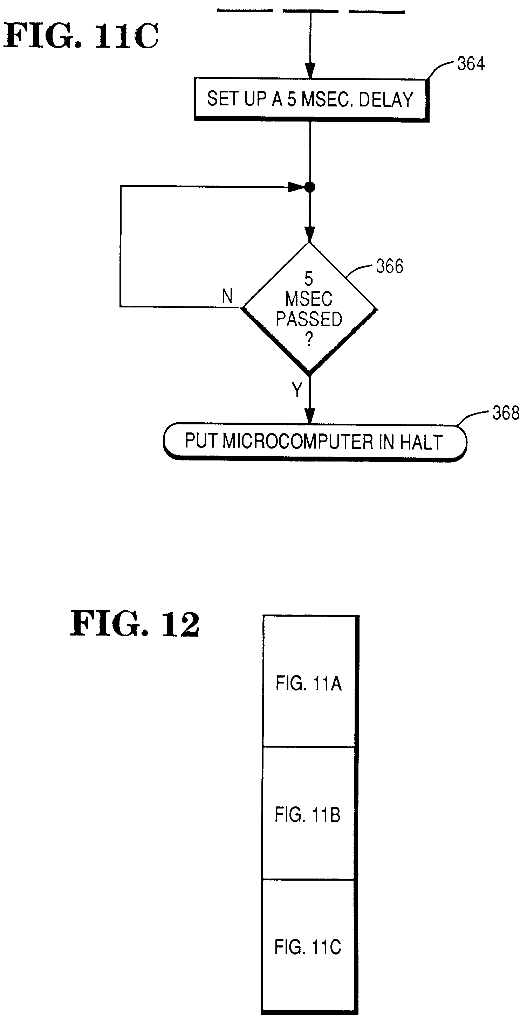

The process continues in Figs. 11A, 11B, and 11C with the PUSHCHR routine (block 300) from Fig. 9P. The program provides for disabling the timer 1 interrupt, stopping both timer 0 and timer 1, setting up the pointer to recall all bars that are previously stored, and setting up a memory location to store the character (block 336). The program then provides for recalling a bar from memory and storing the bar into the memory location for the character (block 338). An inquiry is then made as to whether or not all 7 bars are done (block 340). If not, the program returns to recall a bar from memory and to store the bar into the memory location for the character (block 338). If all 7 bars are done, the program provides for storing the result into a buffer which can store up to 16 characters (block 342). An inquiry is made as to whether or not the result is a last character (block 344). If not, an inquiry is made (Fig. 11B) as to whether or not pin 5 of the controller 46 is high (block 346). If not, the program provides for storing the character in the CHRADD (character add) location (block 348) and then proceeds to the SECCHR routine (block 352). If pin 5 is high, the program calls SENDROU to send the character to the terminal (block 350) and the program continues to the SECCHR routine (block 352). The SECCHR (second character) routine uses a previous measured value to detect and store any upcoming characters to be detected. Since the first character has been detected, the bar element durations and the timing for the first character are known so there is no need to measure each upcoming or succeeding character.

If the result is a last character (block 344), the program sends a stop paper feed signal (block 354). An inquiry is made as to whether or not pin 5 is high (block 356). If not, the program stores the last character into the character add location (block 358) and calls SENDROU to send all characters to the terminal (block 360). If pin 5 is high (block 356), the program calls SENDROU to send the last character to the terminal (block 362). Continuing on to Fig. 11C, the program sets up a delay of 5 milliseconds (block 364) and then makes an inquiry as to whether or not 5 milliseconds have passed (block 366). If not, the program returns to again inquire whether 5 milliseconds have passed. If 5 milliseconds have passed, the program puts the microcomputer (controller 46) in halt (block 368).

Fig. 12 shows the arrangement and orientation of Figs. 11A, 11B, and 11C.

Referring now to Fig. 13, the program provides timer 1 in a timer 1 interrupt service routine (block 370). An inquiry is made as to whether or not this is the last character (block 372). If so, the program clears the LTCHRFG bit (block 374) and goes into the return routine (block 376). If this is not the last character, an inquiry is made as to whether or not this is the end of character (block 378). If not, the program clears the LOOKEND flag (block 379), sets timer 1 for an additional 9.5 milliseconds (block 380) and goes into the return routine (block 382). If this is the end of character, the program has detected an error (block 384) and the program goes to the error routine.

There may be four errors which can cause the program to jump into the error routine. Block 386 shows the four errors and the figures of the drawing which show the origin of the errors. The TUNKERR (from Fig. 9A) is a black bar trunk error, the TUKERR (from Fig. 9C) is a white bar trunk error, the COMERR (from Fig. 9G) is a combination of black bar and white bar errors, and the CHKERR (from Fig. 9K) is an unrecognizable character error. In the case of any of these four errors, the program stops sending data (block 388), stops paper feeding (block 390) and provides a delay of 5 milliseconds (block 392). It is noted that when an error is detected (block 384), paper feeding is stopped (block 390) and there is a delay of 5 milliseconds. The program then returns to the start of the decoding process (Fig. 8A).

It is thus seen that herein shown and described is a bar code decoding control system that utilizes one sensor to read the data channel of the bar code and compensates for variations in widths of the various bar elements.

## Claims

1. A bar code sensing system for sensing a record medium carrying bar coded characters, each character being represented by a plurality of regions, each region having a first or a second reflectivity and being formed by one or a plurality of contiguous bars of nominal equal width, having said first or second reflectivity, sensing means (40,42,44) adapted to sense said bar coded characters as said record medium (20) is moved past said sensing means (40,42,44) at a predetermined speed, and controller means (46) coupled to said sensing means (40,42,44), characterized in that said sensing means (40,42,44) includes a single sensing device (40); by reference level determining means (42) coupled to said sensing device (40) and adapted to determine a reference level in response to the sensing of regions of said first reflectivity; by comparison means (44) coupled to said reference level determining means (42) and adapted to provide data signals representing the sensed regions; and in that said controller means (46) is adapted, in response to said data signals, to identify the last region of each sensed character and the number of bars in each sensed region, by dividing a sensed time interval by a predetermined value, thereby enabling the provision of a representation of each sensed character.

2. A bar code sensing system according to claim 1, characterized in that said timing means includes a first timer (TM0) adapted to measure the time durations of the sensing of said regions, and a second timer (TM1) adapted to measure time durations related to the total character sensing times.

3. A bar code sensing system according to claim 1, or claim 2, characterized in that said sensing device is formed by a single optical sensor (40).

4. A bar code sensing system according to claim 3, characterized in that said optical sensor (40) and said controller means (46) are adapted to be encoded in response to a common enabling signal (SO2).

5. A bar code sensing system according to claim 3 or claim 4, characterized in that said reference level determining means includes a first comparator (42) arranged to operate as a peak detector for voltages provided by said optical sensor (40), and in that said comparison means includes a second comparator (44) coupled to said first comparator (42) and to said optical sensor (40).

6. A method for decoding bar coded characters located on a record medium, wherein each character is represented by a plurality of regions, each having a first or a second reflectivity, each region being formed by one or a plurality of contiguous bars of nominally equal width and having said first or second reflectivity, characterized by the steps of moving said second medium at a predetermined speed past a single sensing device (40) adapted to sense said regions; determining a reference level in response to the sensing of regions of said first reflectivity; comparing the output signals of said sensing device (40) with said reference level to provide data signals representing the sensed regions; timing the sensing of said regions to determine the last region of each sensed character and the number of bars in each sensed region; and dividing a sensed time interval by a predetermined value to determine the number of bars which have been sensed.

7. A method according to claim 6, characterized by the steps of operating a first timer (TM0) to measure the time durations of the sensing of said regions, and operating a second timer (TM1) to measure time durations related to total character sensing times.

# FIG. 1

20

22 { 0 2 4 0 1 9 7

| ITEMS | SERV. | PERS. | LOC. | TABLE | TIME | DATE | CHK NO |
|---|---|---|---|---|---|---|---|
| | 0240197 | | | | | | |
| 1 | | | | | | | |
| 2 | | | | | | | |
| 3 | | | | | | | |
| 4 | | | | | | | |
| 5 | | | | | | | |
| 6 | | | | | | | |
| 7 | | | | | | | |
| 8 | | | | | | | |
| 9 | | | | | | | |
| 10 | | | | | | | |
| 11 | | | | | | | |
| 12 | | | | | | | |
| 13 | | | | | | | |
| 14 | | | | | | | |
| 15 | | | | | | | |
| 16 | | | | | | | |
| 17 | | | | | | | |

REFERENCE NUMBER

DATE ▼ SERVER

AMOUNT

# FIG. 2A

REGULAR CHARACTERS

28 — 30

1
32
2
34

3

4

5

6

7

8

9

0

— 24

# FIG. 2B

END OF CODE CHARACTERS

36 — 38

1

2

3

4

5

6

7

8

9

0

26 —

# FIG. 3A

# FIG. 3B

# FIG. 4

| FIG. 3A | FIG. 3B | FIG. 3C |
|---------|---------|---------|

# FIG. 3C

AFNR
SENSOR

+5V

PTE

54

48

40

+5V

3.3K

3

+

7

LM339

.0047μf     1K

.001μf

1

50

−

6

42

12

12μf

# FIG. 5

FORM NO. MEDIA

18

# FIG. 6

CLKI/ ⌐74

92⌐

RDATA/ ⌐72

⌐96

94⌐

$\overline{b0}$ $\overline{b0}$ $\overline{b0}$ $\overline{b0}$ $\overline{b1}$ b2 b3 $\overline{b4}$ $\overline{b5}$ b6

← 20 MSEC. MAX. →

SAMPLE CHARACTER (5) = 1011001

# FIG. 7

BLACK BAR

7

1

WHITE BAR

1

7

← 6.74 TO 8.4 MSEC. →

**FIG. 8A**

START

102 — INITIALIZATION
• CLEAR LTCHFG BIT
• SET LOOKEND FLAG

104 — WAIT FOR FIRST LIGHT TO DARK TRANSITION

106 — • START TIMER 0
• START TIMER 1

108 — WAIT FOR A DARK
TO LIGHT TRANSITION

110 — • STOP TIMER 0
• RECORD DARK DURATION
• RESTART TIMER 0

112 — END OF CHAR.
?

Y

136 — ANAYS

TO
FIG. 9A

N

114 — WAIT FOR A LIGHT
TO DARK TRANSITION

116 — • STOP TIMER 0
• RECORD LIGHT DURATION
• RESTART TIMER 0

118 — CAL. CHAR. END TIME
?

N

Y

120 — • STOP TIMER 1
• 23.5 MSEC MINUS TIMER 1 ELAPSED TIME
• DIVIDE THE RESULT BY 4.096 MSEC TO FIND
  THE NUMBER OF BARS DETECTED
• ROUND THE DIVIDEND TO THE NEAREST
  NUMBER OF BARS

20

# FIG. 8B

4 BARS HAVE BEEN DETECTED ? — 122

- LOAD TIMER 1 WITH 8 MSEC (2 BARS)
- START TIMER 1
- NO LONGER NEED TO CAL. THE CHARACTER END TIME — 124

3 BARS HAVE BEEN DETECTED ? — 126

- LOAD TIMER 1 WITH 12 MSEC (3 BARS)
- START TIMER 1
- NO LONGER NEED TO CAL. THE CHARACTER END TIME — 128

2 BARS HAVE BEEN DETECTED ? — 130

- START TIMER 1
- STILL NEED TO CAL. THE CHARACTER END TIME — 132

- START TIMER 1
- NO NEED TO CAL. THE CHARACTER END TIME — 134

FROM FIG. 8A —

○ ANAYS — 136

**FIG. 9A**

138
- DISABLE ALL INTERRUPTS
- STOP TIMER 0 AND TIMER 1
- RESET DARK BAR POINTER
- RESET WHITE BAR POINTER

140 ◇ 3 TRUNKS OF WHITE DETECTED ? —N→ 142 ◇ 2 TRUNKS OF WHITE DETECTED ? —N→ 144 ◇ 1 TRUNK OF WHITE DETECTED ? —N→ 146 ○ TUNKERR

| 140 Y | 142 Y | 144 Y | 146 |
|---|---|---|---|
| 148 ASSIGN EACH TRUNK WITH WEIGHT 1 | | 150 ASSIGN THE ONLY WHITE TRUNK WITH WEIGHT 3 | TO FIG. 13 |

EP 0 488 584 A1

EP 0 488 584 A1

**FIG. 9B**

152 — 1ST
TRUNK
LARGER
THAN 2ND
TRUNK
?

Y          N

154 —
- ASSIGN THE 1ST
  TRUNK WITH WEIGHT 2
- ASSIGN THE 2ND
  TRUNK WITH WEIGHT 1

156
- ASSIGN THE 1ST
  TRUNK WITH WEIGHT 1
- ASSIGN THE 2ND
  TRUNK WITH WEIGHT 2

EXPDARK

EP 0 488 584 A1

**FIG. 9C**

EXPDARK

158 — 4 TRUNKS OF DARK DETECTED ? — N →

160 — 3 TRUNKS OF DARK DETECTED ? — N →

162 — 2 TRUNKS OF DARK DETECTED ? — N →

164 — TUKERR → TO FIG. 13

166 — ASSIGN EACH TRUNK WITH WEIGHT 1

180 — FIND DIFF. ( DIFF. = 1ST TRUNK MINUS 2ND TRUNK )

168 — 1ST TRUNK LARGER THAN 2ND TRUNK ?

182 — 1ST TRUNK LARGER THAN 2ND TRUNK ?

**FIG. 9D**

EP 0 488 584 A1

EP 0 488 584 A1

186

- ASSIGN THE 1ST TRUNK WITH WEIGHT **3**
- ASSIGN THE 2ND TRUNK WITH WEIGHT **1**

190

- ASSIGN THE 1ST TRUNK WITH WEIGHT **1**
- ASSIGN THE 2ND TRUNK WITH WEIGHT **3**

192

- ASSIGN THE 1ST TRUNK WITH WEIGHT **2**
- ASSIGN THE 2ND TRUNK WITH WEIGHT **2**

COMBINE

**FIG. 9E**

# FIG. 9F

216

THE WHITE TRUNK CONTAINS THREE BARS ? → N

220

THE WHITE TRUNK CONTAINS TWO BARS ? → N

224

THE WHITE TRUNK CONTAINS ONE BAR ? → N

Y ↓

218

PUT THREE 0's INTO THE LAST LSB

Y ↓

222

PUT TWO 0's INTO THE LAST LSB

Y ↓

226

PUT ONE 0 INTO THE LAST LSB

228

ALL WHITE TRUNKS AND DARK TRUNKS ARE DONE ? → Y

N

212

COMERR

TO FIG. 13

CHECK

## FIG. 9G

**FIG. 9H**

CHECK

230 — CHAR. 1 DETECTED (#71H) ?

232 —
- RECORD 2ND DARK TRUNK TIME AS **DKTIME**
- SIGNAL TO ADD THE FIRST 2 TRUNKS
- CALL **ADDALL** ROUTINE TO DO ADDITION
- SIGNAL TO DIVIDE THE SUM BY 6 ( BARS )

234 — CHAR. 2 DETECTED (#69H) ?

236 —
- RECORD 3RD DARK TRUNK TIME AS **DKTIME**
- SIGNAL TO ADD THE FIRST 4 TRUNKS
- CALL **ADDALL** ROUTINE TO DO ADDITION
- SIGNAL TO DIVIDE THE SUM BY 6 ( BARS )

238 — CHAR. 3 DETECTED (#65H) ?

240 —
- RECORD 3RD DARK TRUNK TIME AS **DKTIME**
- SIGNAL TO ADD THE FIRST 4 TRUNKS
- CALL **ADDALL** ROUTINE TO DO ADDITION
- SIGNAL TO DIVIDE THE SUM BY 6 ( BARS )

EP 0 488 584 A1

# FIG. 9I

242 — CHAR. 4 DETECTED (#63H) ?

**Y →** 244

- RECORD 2ND DARK TRUNK TIME AS **DKTIME**
- SET CHAR4FG ( INDICATE SPECIAL CASE )
- SIGNAL TO ADD THE FIRST 2 TRUNKS
- CALL **ADDALL** ROUTINE TO DO ADDITION
- SIGNAL TO DIVIDE THE SUM BY 5 ( BARS )

**N ↓**

246 — CHAR. 5 DETECTED (#59H) ?

**Y →** 248

- RECORD 3RD DARK TRUNK TIME AS **DKTIME**
- SIGNAL TO ADD THE FIRST 4 TRUNKS
- CALL **ADDALL** ROUTINE TO DO ADDITION
- SIGNAL TO DIVIDE THE SUM BY 6 ( BARS )

**N ↓**

250 — CHAR. 6 DETECTED (#55H) ?

**Y →** 252

- RECORD 4TH DARK TRUNK TIME AS **DKTIME**
- SIGNAL TO ADD THE FIRST 6 TRUNKS
- CALL **ADDALL** ROUTINE TO DO ADDITION
- SIGNAL TO DIVIDE THE SUM BY 6 ( BARS )

**N ↓**

# FIG. 9J

254 — CHAR. 7 DETECTED ( #53H ) ? → **Y**

256 —
- RECORD 3RD DARK TRUNK TIME AS **DKTIME**
- SIGNAL TO ADD THE FIRST 4 TRUNKS
- CALL **ADDALL** ROUTINE TO DO ADDITION
- SIGNAL TO DIVIDE THE SUM BY 5 ( BARS )

**N**

258 — CHAR. 8 DETECTED ( #4DH ) ? → **Y**

260 —
- RECORD 3RD DARK TRUNK TIME AS **DKTIME**
- SIGNAL TO ADD THE FIRST 4 TRUNKS
- CALL **ADDALL** ROUTINE TO DO ADDITION
- SIGNAL TO DIVIDE THE SUM BY 6 ( BARS )

**N**

262 — CHAR. 9 DETECTED ( #4BH ) ? → **Y**

264 —
- RECORD 2ND DARK TRUNK TIME AS **DKTIME**
- SIGNAL TO ADD THE FIRST 4 TRUNKS
- CALL **ADDALL** ROUTINE TO DO ADDITION
- SIGNAL TO DIVIDE THE SUM BY 5 ( BARS )

**N**

EP 0 488 584 A1

EP 0 488 584 A1

**FIG. 9K**

270

CHKERR

TO FIG. 13

N ← 266

CHAR. 0
DETECTED
( #47H )
?

Y →

268

- RECORD 1ST DARK TRUNK TIME AS **DKTIME**
- SIGNAL TO ADD THE FIRST 2 TRUNKS
- CALL **ADDALL** ROUTINE TO DO ADDITION
- SIGNAL TO DIVIDE THE SUM BY 4 ( BARS )

272

- DO DIVISION AND GET THE **BRTIME** VALUE
- DIVIDE THE **BRTIME** BY 2 AND GET **HAFBAR** VALUE

274

IS
CHAR4FG
SET
?

N

Y

276

SUBTRACT THE **BRTIME** FROM **DKTIME\*** TO
OBTAIN A SIGNAL DARK BAR TIME ( **DKTIME** )

## FIG. 9L

TO OBTAIN THE **WHTIME**, SUBTRACT THE
**DKTIME** FROM 2 TIMES OF THE **BRTIME** — 278

RECALL THE FIRST CHARACTER
FROM MEMORY LOCATION 10H — 280

282 —
IS
PIN 5 HIGH
?

N → STORE IN
CHARADD
LOCATION — 286

Y

284 —
CALL **SENDROU** ROUTINE AND SEND
FIRST CHARACTER TO TERMINAL

352 —
FROM
FIG. 11B → SECCHR

288 —
• SET UP TIMER 0 TO MEASURE DARK TRUNK OR WHITE TRUNK
• LOAD TIMER 1 WITH 8 TIMES OF **BRTIME**
• SET LTCHFG BIT TO MONITOR THE LAST CHARACTER
• CLEAR THE LOOKEND FLAG TO IGNORE ANY END OF CHARACTER
• SET UP POINTER TO STORE DARK TRUNK AND WHITE TRUNK TIMINGS

290 —
WAIT FOR A WHITE
TO
DARK TRANSITION

**FIG. 9M**

292 — START BOTH TIMER 0 AND TIMER 1

294 — WAIT FOR A DARK
TO WHITE TRANSITION

296 —
- STOP TIMER 0
- RECORD DARK TRUNK DURATION
- RESTART TIMER 0
- ONE DARK BAR DETECTED

298 — ALL
7 BARS
DETECTED
?

Y

N

302 — THE
RECORDED DARK
DURATION < OR = **DKTIME**
?

Y

N

304 — SUBTRACT ONE **DKTIME**
AND ONE **HAFBAR**
FROM THE RECORDED
DARK DURATION

34

## FIG. 9N

306 — ANY REMAINDER LEFT IN THE TEMPORARY RESULT ?

N

Y

308 — ANOTHER DARK BAR DETECTED

310 — ALL 7 BARS DETECTED ?

Y

N

312 — SUBTRACT ANOTHER **DKTIME** FROM THE TEMPORARY RESULT

314 — ANY REMAINDER LEFT IN THE TEMPORARY RESULT ?

N

Y

316 — WAIT FOR A WHITE TO DARK TRANSITION OR CLEARING OF THE LTCHRFG BY TIMER 1

35

FIG. 9O

318 — · STOP TIMER 0
· RECORD WHITE TRUNK DURATION
· RESTART TIMER 0
· ONE WHITE BAR DETECTED

320 — ALL 7 BARS DETECTED ?

322 — THE RECORDED WHITE DURATION < OR = **WHTIME** ?

324 — SUBTRACT ONE **WHTIME** AND ONE **HAFBAR** FROM THE RECORDED WHITE DURATION

326 — ANY REMAINDER LEFT IN THE TEMPORARY RESULT ?

328 — ANOTHER WHITE BAR DETECTED

**330** ALL 7 BARS DETECTED ?

**332** SUBTRACT ANOTHER **WHTIME** FROM THE TEMPORARY RESULT

**334** ANY REMAINDER LEFT IN THE TEMPORARY RESULT ?

**300** PUSHCHR

TO FIG. 11A

**FIG. 9P**

# FIG. 10

| FIG. 9A |
| FIG. 9B |
| FIG. 9C |
| FIG. 9D |
| FIG. 9E |
| FIG. 9F |
| FIG. 9G |

| FIG. 9H |
| FIG. 9I |
| FIG. 9J |
| FIG. 9K |

| FIG. 9L |
| FIG. 9M |
| FIG. 9N |
| FIG. 9O |
| FIG. 9P |

FROM FIG. 9P

**FIG. 11A**

300

( PUSHCHR )

336

· DISABLE TIMER 1 INTERRUPT
· STOP BOTH TIMER 0 AND TIMER 1
· SET UP POINTER TO RECALL ALL BARS STORED PREVIOUSLY
· SET UP A MEMORY LOCATION TO STORE THE CHARACTER

338

RECALL A BAR FROM MEMORY AND STORE THE BAR
INTO THE MEMORY LOCATION FOR THE CHARACTER
( RESULT )

340

N ◁ ALL
7 BARS
DONE
?

Y

342

STORE THE RESULT INTO A BUFFER
( THE BUFFER CAN STORE UP TO 16 CHARACTERS )

344

THE
RESULT IS A LAST
CHARACTER
? ▷ Y

N

39

# FIG. 11B

STORE IN CHARADD LOCATION — 348

346 — IS PIN 5 HIGH ?

N

Y

CALL **SENDROU** TO SEND THE CHARACTER TO TERMINAL — 350

SECCHR — 352

TO FIG. 9L ←

SEND STOP PAPER FEED SIGNAL ( FINH ) — 354

358 — STORE LAST CHARACTER INTO CHARADD LOCATION

356 — IS PIN 5 HIGH ?

N

Y

CALL **SENDROU** TO SEND ALL CHARACTERS TO TERMINAL — 360

CALL **SENDROU** TO SEND THE CHARACTER TO TERMINAL — 362

40

**FIG. 11C**

SET UP A 5 MSEC. DELAY — 364

5 MSEC PASSED ? — 366

N

Y

PUT MICROCOMPUTER IN HALT — 368

**FIG. 12**

FIG. 11A

FIG. 11B

FIG. 11C

41

**FIG. 13**

370 — TMRONE  TIMER 1 INTERRUPT

372 — LAST CHARACTER ? — Y → 374 — CLEAR LTCHRFG BIT → 376 — RETURN

LAST CHARACTER ? — N → 378 — END OF CHARACTER ? — Y → 384 — ERROR DETECTED

END OF CHARACTER ? — N → 379 — CLEAR LOOKEND FLAG → 380 — SET TIMER FOR 9.5 MSEC. MORE → 382 — RETURN

FROM FIG. 9A
FROM FIG. 9C
FROM FIG. 9G
FROM FIG. 9K
386 — TUNKERR TUKERR COMERR CHKERR

388 — STOP SENDING DATA

390 — STOP PAPER FEEDING

392 — DELAY FOR 5 MSEC.

START

EP 0 488 584 A1

| | | |

**European Patent Office**

**EUROPEAN SEARCH REPORT**

Application Number

EP 91 31 0729

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 098 955 (DEUTSCHE THOMSON-BRANDT GMBH) <br> * abstract; claim 1 * | 1,5,6 | G06K7/14 |
| A | US-A-4 146 782 (R.G. BARNICH) <br> * abstract; figure 1 * | 1,6 | |
| A | EP-A-0 267 549 (QUENTIAL, INC.) <br> * abstract; claim 2 * | 1,6 | |
| A | EP-A-0 055 964 (M. NADLER) <br> * claims 1,6 * | 1,5,6 | |
| | | | TECHNICAL FIELDS SEARCHED (Int. Cl.5) |
| | | | G06K |

The present search report has been drawn up for all claims

| Place of search | Date of completion of the search | Examiner |
|---|---|---|
| BERLIN | 24 FEBRUARY 1992 | ZOPF K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

43